# EUROPEAN PATENT SPECIFICATION

(11) **EP 3 843 452 B1**
(45) Date of publication and mention of the grant of the patent: **16.10.2024**
(21) Application number: 19852581.8
(22) Date of filing: 21.08.2019
(51) Int. Cl.: H04W 28/04, H04L 1/18, H04W 72/12

(54) **TERMINAL AND WIRELESS COMMUNICATION METHOD**
ENDGERÄT UND DRAHTLOSKOMMUNIKATIONSVERFAHREN
TERMINAL ET PROCÉDÉ DE COMMUNICATION SANS FIL

(30) Priority: 21.08.2018 JP 2018167347
(43) Date of publication of application: 30.06.2021
(73) Proprietor: NTT DOCOMO, INC., Chiyoda-ku Tokyo 100-6150 (JP)
(72) Inventor: YOSHIOKA, Shohei, Tokyo 100-6150 (JP); TAKEDA, Kazuki, Tokyo 100-6150 (JP); NAGATA, Satoshi, Tokyo 100-6150 (JP); WANG, Lihui, Beijing 100190 (CN); GUO, Shaozhen, Beijing 100190 (CN)
(74) Representative: Hoffmann Eitle
(86) International application number: PCT/JP2019/032583
(87) International publication number: WO 2020/040179

(56) References cited:
- JP-A- 2016 533 654
- US-A1- 2018 278 380
- QUALCOMM INCORPORATED: "Summary of DL/UL scheduling and HARQ management", vol. RAN WG1, no. Sanya, China; 20180416 - 20180420, 17 April 2018 (2018-04-17), XP051427608, Retrieved from the Internet <URL:http://www.3gpp.org/ftp/Meetings%5F3GPP%5FSYNC/RAN1/Docs/> [retrieved on 20180417]
- SAMSUNG: "Offline summary on CA aspects", vol. RAN WG1, no. Sanya, China; 20180416 - 20180420, 19 April 2018 (2018-04-19), XP051427829, Retrieved from the Internet <URL:http://www.3gpp.org/ftp/Meetings%5F3GPP%5FSYNC/RAN1/Docs/> [retrieved on 20180419]

## Description

### Technical Field

The present disclosure relates to a user terminal and a radio communication method in next-generation mobile communication systems.

### Background Art

In the UMTS (universal mobile telecommunications system) network, the specifications of Long-Term Evolution (LTE) have been drafted for the purpose of further increasing high speed data rates, providing lower latency, and so on (see Non-Patent Literature 1). The specifications of LTE-A (LTE-Advanced, LTE Rel.10, Rel. 11, Rel. 12, Rel. 13) also have been drafted for the purpose of further high capacity and advancement of the LTE (LTE Rel. 8, Rel. 9) or the like.

Successor systems of LTE (referred to as, for example, FRA (Future Radio Access), 5G (5th generation mobile communication system), 5G+(plus), NR (New Radio), NX (New radio access), FX (Future generation radio access), LTE Rel.14, LTE Rel.15 or later versions, and so on) are also under study.

In the existing LTE system (for example, LTE Rel. 8 to Rel. 14), a user terminal (UE (User Equipment)) controls reception of a downlink shared channel (for example, PDSCH (Physical Downlink Shared Channel)) based on downlink control information (DCI (Downlink Control Information, also referred to as DL assignment, or the like) transmitted on a downlink control channel (for example, PDCCH (Physical Downlink Control Channel). The user terminal also controls transmission of an uplink shared channel (for example, PUSCH (Physical Uplink Shared Channel) based on DCI (also referred to as an UL grant or the like).

In existing LTE systems, downlink (DL) and/or uplink (UL) communications are carried out using 1 ms subframes (referred to as, for example, "transmission time intervals (TTIs)", and so on). This subframe is the unit of time to transmit one data packet that is channel-encoded, and is the processing unit in scheduling, link adaptation, retransmission control (HARQ (Hybrid Automatic Repeat Request), and so on.

In the existing LTE system, an acknowledgment signal (also referred to as HARQ-ACK, ACK/NACK, or A/N) for a DL signal (for example, PDSCH) is controlled to be fed back 4 subframes after.

Non-Patent Literature 2 describes DL/UL scheduling and HARQ management.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTR_AN); Overall description; Stage 2 (Release 8)," April, 2010
Non-Patent Literature 2: QUALCOMM INCORPORATED: "Summary of DL/UL scheduling and HARQ management"; 3GPP DRAFT; R1-1805540

### Summary of Invention

### Technical Problem

In future radio communication systems (for example, NR, 5G, 5G+, or Rel.15 or later versions), it is assumed that a transmission timing of an acknowledgment signal (also referred to as HARQ-ACK, ACK/NACK, or A/N) for a DL signal (for example, PDSCH) is specified to the UE by use of the DCI or the like. It is also assumed that the UE feeds back a HARQ-ACK based on a codebook (in units of codebooks).

In the NR, it is assumed that transmission of an uplink shared channel (PUSCH) is specified to the UE by use of the DCI or the like, and the UE transmits a HARQ-ACK on the uplink shared channel.

However, how to control the HARQ-ACK transmitted on the uplink shared channel is problematic. If the HARQ-ACK codebook cannot be appropriately transmitted, communication quality is possibly deteriorated.

Then, one of objects of the present disclosure is to provide a user terminal and radio communication method for appropriately controlling transmission of an acknowledgment signal on an uplink shared channel.

### Solution to Problem

This object is accomplished by the subject-matter of the independent claims. The dependent claims concern particular embodiments.

### Advantageous Effects of Invention

According to an aspect of the present disclosure, transmission of an acknowledgment signal on an uplink shared channel can be appropriately controlled.

### Brief Description of Drawings

FIG. 1 is a diagram to show an example of HARQ-ACK piggyback in PUSCH repetition transmissions;
FIG. 2 is a diagram to show an example of HARQ-ACK piggyback according to Aspect 1-1-1;
FIG. 3 is a diagram to show an example of HARQ-ACK piggyback according to Aspect 1-1-2;
FIG. 4 is a diagram to show an example of HARQ-ACK piggyback according to Aspect 1-2-1;
FIG. 5 is a diagram to show an example of HARQ-ACK piggyback according to Aspect 1-2-2;
FIG. 6 is a diagram to show an example of HARQ-ACK piggyback according to Aspect 2-1-1;
FIG. 7 is a diagram to show an example of HARQ-ACK piggyback according to Aspect 2-1-2;
FIG. 8 is a diagram to show an example of HARQ-ACK piggyback according to Aspect 2-2-1;
FIG. 9 is a diagram to show an example of HARQ-ACK piggyback according to Aspect 2-2-2;
FIG. 10 is a diagram to show an example of a schematic structure of a radio communication system according to the present embodiment;
FIG. 11 is a diagram to show an example of an overall structure of a base station according to the present embodiment;
FIG. 12 is a diagram to show an example of a functional structure of the base station according to the present embodiment;
FIG. 13 is a diagram to show an example of an overall structure of a user terminal according to the present embodiment;
FIG. 14 is a diagram to show an example of a functional structure of the user terminal according to the present embodiment; and
FIG. 15 is a diagram to show an example of a hardware structure of the base station and the user terminal according to the present embodiment.

### Description of Embodiments

### (HARQ-ACK Codebook)

For future radio communication systems (hereinafter, also referred to as NR), a study is underway to semi-statically or dynamically determine a HARQ-ACK codebook (which is may be referred to as a HARQ-ACK size) by a UE. The base station may notify the UE of information indicating a method for determining the HARQ-ACK codebook (for example, information indicating whether the HARQ-ACK codebook is semi-static or dynamic) through higher layer signaling. The HARQ-ACK codebook may be referred to as a PDSCH HARQ-ACK codebook.

Here, higher layer signaling may be, for example, any of RRC (Radio Resource Control) signaling, MAC (Medium Access Control) signaling, broadcast information and the like, or a combination of these.

For MAC signaling, MAC control element (MAC CE), MAC PDU (Protocol Data Unit), and the like may be used, for example. The broadcast information may be, for example, a master information block (MIB), a system information block (SIB), minimum system information (RMSI (Remaining Minimum System Information)), other system information (OSI), and the like.

In a case that the UE is configured to semi-statically determine a HARQ-ACK codebook (or, a semi-static HARQ-ACK codebook) in a given cell, cell group (CG), PUCCH group, or the like, the determination of the HARQ-ACK codebook may be referred to as a type 1 HARQ-ACK codebook determination. In a case that the UE is configured to dynamically determine a HARQ-ACK codebook (or, a dynamic HARQ-ACK codebook), the determination of the HARQ-ACK codebook may be referred to as a type 2 HARQ-ACK codebook determination.

The UE may determine the number of bits of the HARQ-ACK based on a structure configured through higher layer signaling in the type 1 (semi-static) HARQ-ACK codebook determination. The configured structure may include, for example, the number (for example, maximum number, minimum number, or the like) of DL transmissions (for example, PDSCH) to be scheduled across a range associated with the HARQ-ACK feedback timing.

That range is also referred to as a HARQ-ACK bundling window, a HARQ-ACK feedback window, a bundling window, a feedback window, and so on. The bundling window may correspond to at least one of ranges of space, time, and frequency.

On the other hand, the UE may determine the number of HARQ-ACK bits based on a bit string of a DL assignment index (DAI (Downlink Assignment Indicator (index)) field included in downlink control information (for example, DL assignment) in the type 2 (dynamic) HARQ-ACK codebook determination.

The UE may determine (generate) a HARQ-ACK information bit based on the determined HARQ-ACK codebook and transmit the generated HARQ-ACK using at least one of an uplink control channel (PUCCH (Physical Uplink Control Channel)) and an uplink shared channel (PUSCH (Physical Uplink Shared Channel)).

The base station may transmit information on the total number of pieces of DL data to be scheduled to the UE with being included in the downlink control information used to indicate the PDSCH scheduling. Note that in a case that the bundling window is configured with a plurality of time units, the base station may notify of the total number of pieces of DL data until each slot, to the DCI transmitted in each slot.

The information on the total number of pieces of DL data to be scheduled corresponds to the total number of bits of the HARQ-ACK (or a codebook size) fed back by the UE. The information on the total number of pieces of DL data to be scheduled may be referred to as a total DAI (T-DAI, DL total DAI).

The DCI used for scheduling each PDSCH may include a counter DAI (C-DAI) in addition to the total DAI. The counter DAI indicates a cumulative total value of the scheduled data. For example, the downlink control information of one or a plurality of CCs to be scheduled in a certain time unit (slot or subframe) may include the counter DAIs numbered in the order of a CC index. In a case that the HARQ-ACKs for the DL data to be scheduled across a plurality of time units are collectively fed back (for example, in a case that the bundling window includes a plurality of slots), the counter DAI may apply across the plurality of time units.

The counter DAI may be cumulated in ascending order of the CC indexes from a duration with a small slot index.

The total DAI indicates a sum (the total number) of pieces of the scheduled data. For example, the downlink control information for one or a plurality of CCs to be scheduled in a certain time unit (slot or subframe) may respectively include the number of pieces of the data to be scheduled. That is, the total DAIs included in the downlink control information transmitted in the same slot have the same value. In the case that the HARQ-ACKs for the DL data to be scheduled across a plurality of time units are collectively fed back (for example, in the case that the bundling window includes a plurality of slots), the total DAI may be configured across the plurality of time units.

In a case that the UE is configured with a dynamic HARQ-ACK codebook through higher layer signaling or the like from the base station, the UE may control a HARQ-ACK bit arrangement (also referred to as a HARQ-ACK bit order, or an A/N assignment order) to be fed back based on the counter DAI included in the downlink control information.

In a case that the counter DAI included in the downlink control information received by the UE is nonconsecutive, the UE feeds back the relevant nonconsecutive object (DL data) as a NACK to the base station. With this configuration, even in a case that the UE fails to detect the downlink control information itself for scheduling the data of a certain CC, the UE can appropriately perform retransmission control by a feedback as a NACK even if the UE cannot recognize the CC failed to be detected.

In such a manner, the HARQ-ACK bit order is determined based on the value of the counter DAI (counter DAI value). The counter DAI value in a given time unit (for example, PDCCH monitoring occasion) is determined based on the CC (or, cell) index.

In the NR, a study is underway to define at least a first DCI format and a second DCI format as the DCI for scheduling the DL transmission (for example, PDSCH). The first DCI format and the second DCI format are so defined they are different from each other in content, a payload size and the like. The first DCI format may be referred to as DCI format 1_0 and the second DCI format may be referred to as DCI format 1_1.

Similarly, a study is underway to define at least DCI format 0_0 and DCI format 0_1 as the DCI for scheduling the UL transmission (for example, PUSCH).

For NR, a study is underway in which the counter DAI is included in both the first DCI format and the second DCI format, whereas the total DAI is configured to be included in one DCI format. Specifically, the first DCI format may not include the total DAI, but the second DCI format may include the total DAI.

Next, the feedback control of the HARQ-ACK by use of the PUSCH will be described.

In a case that the UE multiplexes a HARQ-ACK feedback on a PUSCH to not be scheduled in the DCI format (configured-grant PUSCH) or a PUSCH to be scheduled in DCI format 0_0, the same operation as that in multiplexing the HARQ-ACK on the PUCCH can be applied. That is, a 2-bit counter DAI may be included in at least one of the first DCI format 1_0 and the second DCI format 1_1, whereas a 2-bit total DAI may be included in one DCI format (for example, the second DCI format 1_1).

In contrast, in a case that the UE multiplexes the HARQ-ACK feedback on the PUSCH to be scheduled in DCI format 0_1, the 2-bit counter DAI is included in at least one of first DCI format 1_0 and the second DCI format 1_1. The UE may use, as the total DAI, an UL DAI (for example, first two bits) included in the DCI (for example, DCI format 0_1) for scheduling the PUSCH.

Note that in a case that only one serving cell is configured, the second DCI format 1_1 may be configured not to include the total DAI.

In a case of HARQ-ACK transmission using the dynamic HARQ-ACK codebook, the UE may perform the HARQ-ACK transmission in units of transport blocks (TBs) or in units of code blocks (CBs). In this case, the HARQ-ACK codebooks may be separately generated (or, a codebook and a sub-codebook may be generated) for the TB-based HARQ-ACK transmission and the CB-based HARQ-ACK transmission.

For example, a 2-bit counter DAI may be included in at least one of first DCI format 1_0 and second DCI format 1_1, and a 2-bit total DAI may be included in one DCI format (for example, second DCI format 1_1). First two bits of the total DAI in a UL direction may be included as a first sub-codebook in DCI format 0_1, and next two bits of the total DAI in the UL direction may be included as a next sub-codebook in DCI format 0_1.

### (PDSCH-to-ACK timing)

In NR, the UE determines a timing from receiving a PDSCH to transmitting a HARQ-ACK corresponding to the PDSCH (which may be also referred to as a PDSCH-to-ACK timing, "K1", and so on) based on the DCI (which may be referred to as a DL DCI, a DL assignment, DCI format 1_0, DCI format 1_1, and the like) for scheduling the

### PDSCH.

For example, when detecting DCI format 1_0, the UE transmits, based on a field for indication of timing from PDSCH to HARQ (HARQ feedback timing information, "PDSCH-to-HARQ-timing-indicator field") included in the DCI, a HARQ-ACK corresponding to the PDSCH in a slot n + k (for example, k is an integer from 1 to 8) with reference to a slot n including a last symbol of the PDSCH.

When detecting DCI format 1_1, the UE transmits, based on a "PDSCH-to-HARQ-timing-indicator field" included in the DCI, a HARQ-ACK corresponding to the PDSCH in a slot n + k with reference to a slot n including a last symbol of the PDSCH. A correspondence relationship between k and the above timing indicator field here may be configured to the UE for each PUCCH (or PUCCH group, cell group) through higher layer signaling.

For example, the above correspondence relationship may be configured by a parameter (which may be referred to as a dl-DataToUL-ACK, a Slot-timing-value-K1, and so on) included in a PUCCH configuration information element (PUCCH Config information element) of RRC signaling. For example, a plurality of candidate values of a PDSCH-to-ACK timing indicator may be configured by the K1 through higher layer signaling, and one of the plurality of candidate values may be indicated by the DCI for scheduling the

### PDSCH.

The K1 may be configured for each PUCCH group (or cell group). The K1 may be a time determined based on numerology (for example, SCS) for a channel transmitting the HARQ-ACK (for example, PUCCH or PUSCH).

### (HARQ-ACK Transmission on PUSCH)

In a case that a timing of a specific PUSCH based on the UL DCI (for example, a slot) matches a timing of a HARQ-ACK based on the DL DCI (for example, a slot), the UE may piggyback the HARQ-ACK onto the specific PUSCH.

The UE may transmit a HARQ-ACK codebook on one PUSCH in PUSCH repetition transmissions and a HARQ-ACK codebook on another PUSCH in the PUSCH repetition transmissions.

A study is underway to indicate HARQ-ACK piggyback onto a PUSCH by an UL DAI in DCI format 0_1 for scheduling PUSCH repetition transmissions (a DAI in the DCI for scheduling the PUSCH (UL grant), a first DAI).

In a case that the UE is configured with a semi-static HARQ-ACK codebook, the UL DAI is one bit long, which indicates whether or not a HARQ-ACK is piggybacked. In a case that the UE is configured with a dynamic HARQ-ACK codebook, the UL DAI is two bits long, which indicates a HARQ-ACK codebook size.

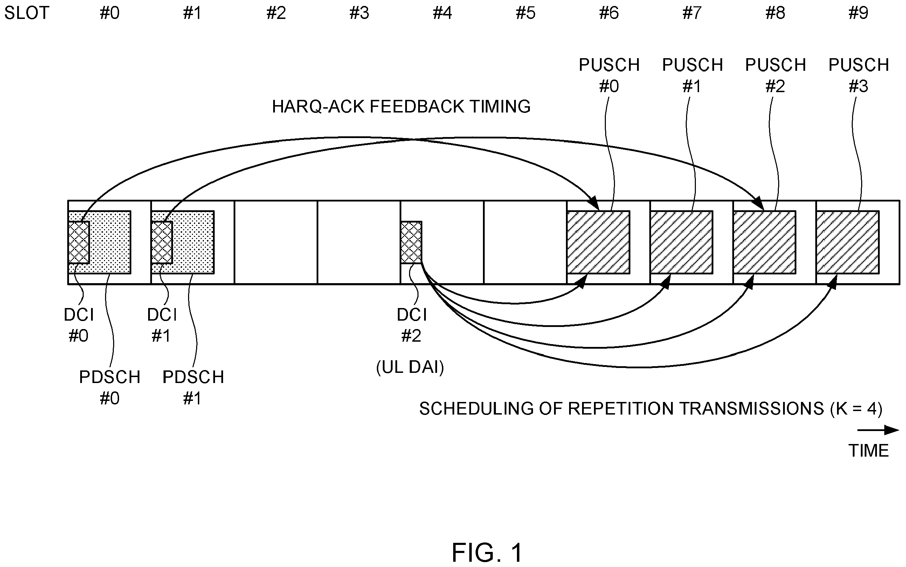

In an example of FIG. 1, the UE receives DCI #0 in slot #0 to receive PDSCH #0 based on DCI #0. The DCI 0 schedules PDSCH #0 and indicates slot #6 as a HARQ-ACK feedback timing for PDSCH #0. After that, the UE receives DCI #1 in slot #1 to receive PDSCH #1 based on DCI #1. DCI #1 schedules PDSCH #1 and indicates slot #8 as a HARQ-ACK feedback timing for PDSCH #1.

After that, the UE receives DCI #3 in slot #4. DCI #3 schedules PUSCH repetition transmissions including the PUSCHs #0 to #3 in slots #6 to #9. After that, the UE transmits the PUSCHs #0 to #3 in slots #6 to #9, based on DCI #3.

In this case, the UE piggybacks a HARQ-ACK codebook for PDSCH #0 onto the PUSCH #0, and piggybacks a HARQ-ACK codebook for PDSCH #1 onto the PUSCH #2.

In the case that two HARQ-ACK codebooks are piggybacked onto one PUSCH repetition transmission in this way, it can be assumed that the UL DAI indicates only the HARQ-ACK codebook on one PUSCH in the PUSCH repetition transmission. In this case, how the UE controls the HARQ-ACK transmission based on the UL DAI is not clear. Therefore, the base station may possibly not receive correctly the HARQ-ACK codebook on the PUSCH repetition transmission.

In a case that the UE fails to receive the DCI (DL total DAI) for scheduling the PDSCH, the number of HARQ-ACKs transmitted by the UE is different from the DL total DAI, and therefore, the base station cannot appropriately acquire the HARQ-ACK.

Then, the inventors of the present invention have conceived of a method for appropriately controlling the transmission of the acknowledgment signal (HARQ-ACK) in the repetition transmissions of the uplink shared channel.

Hereinafter, embodiments according to the present invention will be described with reference to the drawings. Aspects described below may be employed independently or in combination.

### (Aspect 1)

The UE may not repeat rate matching for the PUSCH in a case of piggybacking the UCI (HARQ-ACK) in the PUSCH repetition transmissions.

The UE may perform rate matching of the UL data in one PUSCH in the PUSCH repetition transmissions (a specific PUSCH), and may not perform the rate matching of the UL data in a PUSCH other than the specific PUSCH in the PUSCH repetition transmissions (non-specific PUSCH).

The UE may not perform the rate matching of the UL data regardless of whether to perform the rate matching of the UL data in the specific PUSCH in the PUSCH repetition transmissions, in the non-specific PUSCH in the PUSCH repetition transmissions. In other words, the UE may not perform the rate matching of the UL data in the non-specific PUSCH regardless of whether or not the non-specific PUSCH is a HARQ-ACK feedback timing.

### <Aspect 1-1>

A description is given of a case that the UE is configured with a semi-static HARQ-ACK codebook (type 1 HARQ-ACK codebook determination).

The UE configured with the semi-static HARQ-ACK codebook may comply with one of next Aspects 1-1-1 and 1-1-2.

### <<Aspect 1-1-1>>

The DAI (UL DAI) in the DCI (UL DCI, UL grant, DCI format 0_0, 0_1) for scheduling PUSCH repetition transmissions may indicate whether a HARQ-ACK is piggybacked onto one PUSCH (specific PUSCH) in the PUSCH repetition transmissions.

The specific PUSCH may be a PUSCH satisfying a given condition among the PUSCHs carrying the HARQ-ACK in the PUSCH repetition transmissions. The given condition may be one of the next three conditions 1 to 3.

### - Condition 1

The specific PUSCH may be a PUSCH being the earliest and having the smallest CC index among some PUSCHs each carrying the HARQ-ACK in the PUSCH repetition transmissions. In a case that the PUSCH repetition transmissions are repetitions in a time direction, the specific PUSCH may be the earliest PUSCH among some PUSCHs each carrying the HARQ-ACK in the PUSCH repetition transmissions. In a case that the PUSCH repetition transmissions are repetitions in a frequency direction, the specific PUSCH may be a PUSCH having the smallest CC index among some PUSCHs each carrying the HARQ-ACK in the PUSCH repetition transmissions.

### - Condition 2

The specific PUSCH may be a PUSCH onto which piggybacked is a HARQ-ACK for a PDSCH being the earliest and having the smallest CC index among the PUSCHs in the PUSCH repetition transmissions.

### - Condition 3

The specific PUSCH may be a PUSCH onto which piggybacked is a HARQ-ACK based on a PDCCH being the earliest and having the smallest CC index among the PUSCHs in the PUSCH repetition transmissions.

The DAI (DL total DAI) in the DCI (DL DCI, DL assignment, DCI format 1_0, 1_1) for scheduling the PDSCH may indicate the number of PDSCHs (the number of HARQ-ACKs) to be scheduled.

The UE may control the HARQ-ACK piggyback onto the specific PUSCH (at least one of presence or absence of the HARQ-ACK piggyback and the HARQ-ACK codebook size) based on at least one of the DL total DAI in the DL DCI and the UL DAI in the UL DCI.

The UE can determine the HARQ-ACK transmission on the specific PUSCH based on the UL DAI even in a case of failing to receive the DL DAI corresponding to the specific PUSCH, and therefore, the base station can appropriately receive the HARQ-ACK.

In the case of piggybacking the HARQ-ACK onto the specific PUSCH, the UE may map (multiplex) the HARQ-ACK to a resource acquired by the rate matching of the UL data on the PUSCH.

A process of the rate matching for the PUSCH is to control the number of bits after coding (coded bits) in consideration of actually available radio resources. In a case that the number of coded bits is smaller than the number of bits mappable to the actually available radio resources, at least some of the coded bits may be repeated. In a case that the number of coded bits is larger than the number of mappable bits, some of coded bits may be deleted.

In a case that the UE transmits the HARQ-ACK of up to N bits on the specific PUSCH, the UE may map (multiplex) the HARQ-ACK to a resource acquired by puncturing the UL data on the specific PUSCH. In a case that the UE transmits the HARQ-ACK of more than N bits on the specific PUSCH, the UE may map (multiplex) the HARQ-ACK to a resource acquired by the rate matching of the UL data on the specific PUSCH. N may be 2 or another integer.

A process of puncturing the PUSCH is to perform coding assuming that the resource allocated for the PUSCH can be utilized (or without consideration of an amount of an unavailable resource), but may mean that a coded symbol is not mapped to an actually unavailable resource (that is, a free resource is made). On a receiving side, performance deterioration due to the puncturing can be suppressed by not using the coded symbol of the punctured resource in decoding.

The HARQ-ACK of up to N bits may be allowed to be piggybacked onto the non-specific PUSCH in the PUSCH repetition transmissions. In other words, the UE may piggyback the HARQ-ACK of up to N bits onto the non-specific PUSCH in the PUSCH repetition transmissions. N may be 2 or another integer. The UE may map (multiplex) the HARQ-ACK to a resource acquired by puncturing the UL data on the non-specific PUSCH.

The UE may determine whether to piggyback the HARQ-ACK onto the non-specific PUSCH, based on the DL DAI (DL total DAI) and a given number N.

The UE may be configured with a HARQ-ACK association set (HARQ-ACK codebook association set, DL association set) to associate a PDSCH slot with a PUSCH slot based on the HARQ-ACK association set. The HARQ-ACK association set (DL association set) indicates the PDSCH slot associated with the HARQ-ACK transmitted in one slot.

The UE may transmit a NACK as a HARQ-ACK for a slot with no PDSCH in the HARQ-ACK association set.

The base station may not configure the HARQ-ACK of more than N bits on the non-specific PUSCH. In other words, the UE may assume that the HARQ-ACK of more than N bits is not configured on the non-specific PUSCH (or, may not assume that the HARQ-ACK of more than N bits is configured on the non-specific PUSCH). In the case that the HARQ-ACK of more than N bits is configured on the non-specific PUSCH, the UE may deal with this case as an error case.

In a case that the UE punctures the non-specific PUSCH by up to N bits, the base station can assume that the HARQ-ACK is piggybacked onto the non-specific PUSCH based on the DL total DAI, and decode the UL data and HARQ-ACK on the non-specific PUSCH.

The base station can appropriately receive the UL data and the HARQ-ACK by processing the puncturing of the UL data on the non-specific PUSCH based on the DL DAI and the given number N.

Even if the UE fails to detect the DL DCI and transmits the PUSCH without puncturing of the corresponding non-specific PUSCH, the base station can assume the puncturing of the resource for the HARQ-ACK codebook to decode the PUSCH without using the resource for the HARQ-ACK codebook.

In a case that the HARQ-ACK timing is the non-specific PUSCH and the HARQ-ACK is of more than N bits, the UE may drop the HARQ-ACK or piggyback the HARQ-ACK onto a PUSCH after (next to) the non-specific PUSCH.

The UE may puncture the UL data on the PUSCH in a case of piggybacking the HARQ-ACK of up to N bits onto the PUSCH, and may perform the rate matching of the UL data on the PUSCH in a case of piggybacking the HARQ-ACK of equal to or greater than N bits (exceeding N bits) onto the PUSCH. The base station may assume this operation of the UE to decode the PUSCH and the HARQ-ACK.

The UE may not be notified of the HARQ-ACK piggybacked onto the non-specific PUSCH, and therefore, overhead can be suppressed.

A restriction (N bits) given to the HARQ-ACK codebook on the non-specific PUSCH allows reception performance of the PUSCH to be ensured.

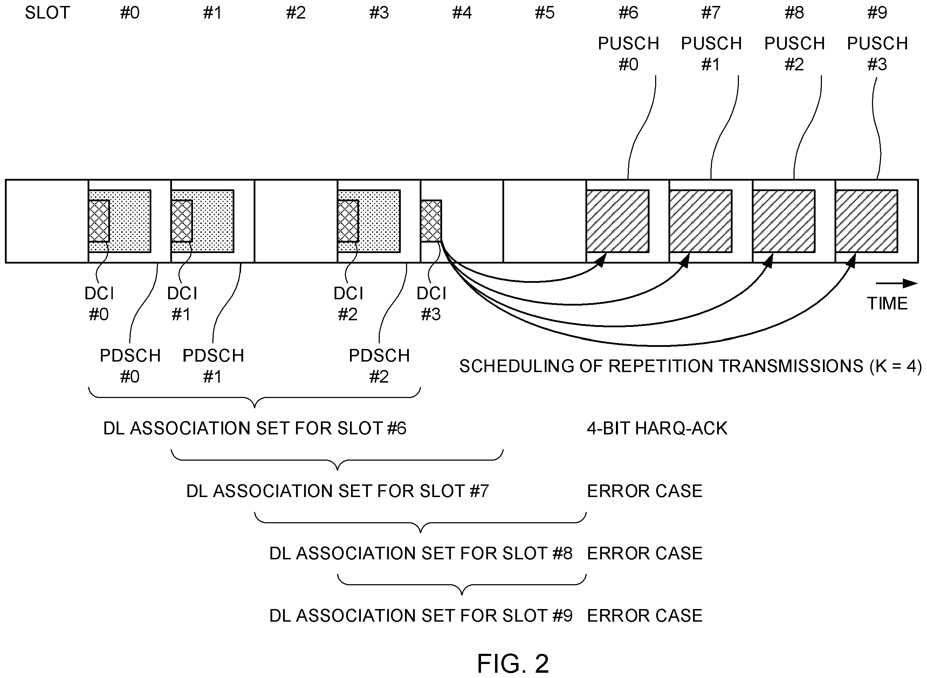

In an example of FIG. 2, N is 2.

In slot #0, the UE receives DCI #0 and PDSCH #0 scheduled on the basis of DCI #0.

In slot #1, the UE receives DCI #1 and PDSCH #1 scheduled on the basis of DCI #1.

In slot #3, the UE receives DCI #2 and PDSCH #2 scheduled on the basis of DCI #2.

In slot #4, the UE receives DCI #3. DCI #3 schedules repetition transmissions with the number of repetitions K = 4 in slots #6 to #9.

The specific PUSCH is the earliest PUSCH (PUSCH #0).

The UL DAI in DCI #3 indicates whether to piggyback the HARQ-ACK onto the PUSCH #0 (specific PUSCH). In this example, the UL DAI indicates that the HARQ-ACK is piggybacked onto the specific PUSCH (valid).

The UE is configured with the HARQ-ACK association set (K1 = {3, 4, 5, 6}).

A HARQ-ACK association set for slot #6 includes slots #0 to #3. The UE configured with this HARQ-ACK association set piggybacks a 4-bit HARQ-ACK for slots #0 to #3 onto the PUSCH #0 in slot #6 (specific PUSCH).

A HARQ-ACK association set for slot #7 is slots #1 to #4. This HARQ-ACK association set configures a HARQ-ACK of more than two bits onto the non-specific PUSCH, and therefore, this is an error case. The UE may not transmit a HARQ-ACK in slot #7.

A HARQ-ACK association set for slot #8 is slots #2 to #5. This HARQ-ACK association set configures a HARQ-ACK of more than two bits onto the non-specific PUSCH, and therefore, this is an error case. The UE may not transmit a HARQ-ACK in slot #8.

A HARQ-ACK association set for slot #9 is slots #3 to #5. This HARQ-ACK association set configures a HARQ-ACK of more than two bits onto the non-specific PUSCH, and therefore, this is an error case. The UE may not transmit a HARQ-ACK in slot #9.

### <<Aspect 1-1-2>>

The DAI (UL DAI) in the DCI (UL DCI, UL grant, DCI format 0_0, 0_1) for scheduling PUSCH repetition transmissions may indicate whether a HARQ-ACK is piggybacked onto all PUSCHs in the PUSCH repetition transmissions.

Here, the all PUSCHs in the PUSCH repetition transmissions may be interpreted as all PUSCHs each specified as a HARQ-ACK feedback timing by the DCI (DL DCI) for scheduling the PDSCH or all PUSCHs each capable of transmitting a HARQ-ACK, in the PUSCH repetition transmissions.

In a case that the UL DAI is 1, the UE may piggyback the HARQ-ACK onto the all PUSCHs in the PUSCH repetition transmissions.

In a case that the UL DAI is 0, the UE may not piggyback the HARQ-ACK onto the all PUSCHs in the PUSCH repetition transmissions.

The UE may determine the HARQ-ACK codebook size based on a semi-static HARQ-ACK codebook generation procedure (type 1 HARQ-ACK codebook determination).

The UE may be configured with a HARQ-ACK association set to associate a PDSCH slot with a PUSCH slot based on the HARQ-ACK association set.

The UE may transmit a NACK as a HARQ-ACK for a slot with no PDSCH in the HARQ-ACK association set.

The UE may not be notified of the HARQ-ACK piggybacked onto the non-specific PUSCH, and therefore, overhead can be suppressed.

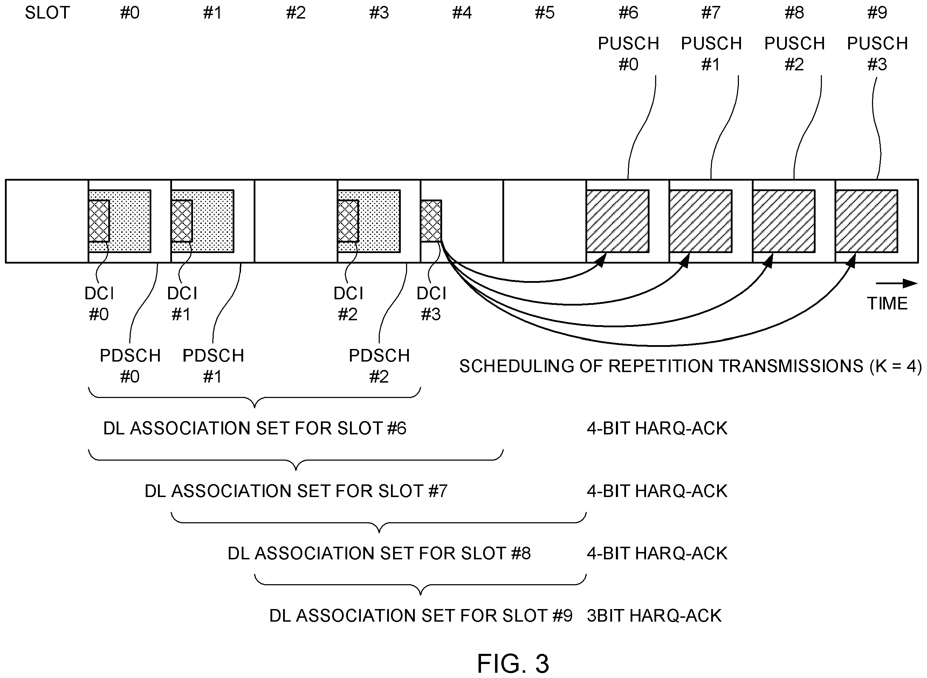

In an example of FIG. 3, the UE receives DCIs #0 to #3 and PDSCHs #0 to #2 similar to FIG. 2.

The UL DAI in DCI #3 indicates whether to piggyback the HARQ-ACK onto the PUSCHs #0 to #3 (non-specific PUSCHs). In this example, the UL DAI indicates that the HARQ-ACK is piggybacked onto the non-specific PUSCH (valid).

The UE is configured with the HARQ-ACK association set (K1 = {3, 4, 5, 6}).

A HARQ-ACK association set (DL association set) for slot #6 includes slots #0 to #3. The UE piggybacks a 4-bit HARQ-ACK for slots #0 to #3 onto the PUSCH #0.

A HARQ-ACK association set for slot #7 includes slots #1 to #4. The UE piggybacks a 4-bit HARQ-ACK for slots #1 to #4 onto the PUSCH #1.

A HARQ-ACK association set for slot #8 includes slots #2 to #5. The UE piggybacks a 4-bit HARQ-ACK for slots #2 to #5 onto the PUSCH #2.

Slot #6 is an UL slot, and therefore, a HARQ-ACK association set for slot #9 includes slots #3 to #5. The UE piggybacks a 3-bit HARQ-ACK for slots #3 to #5 onto the PUSCH #3.

The UE may use a NACK as a HARQ-ACK for a slot with no HARQ-ACK (slot with no PDSCH).

### <Aspect 1-2>

A description is given of a case that the UE is configured with a dynamic HARQ-ACK codebook (type 2 HARQ-ACK codebook determination).

The DAI (UL DAI) in the DCI (UL DCI, UL grant, DCI format 0_0, 0_1) for scheduling PUSCH repetition transmissions may indicate a HARQ-ACK codebook size on one PUSCH (specific PUSCH) in the PUSCH repetition transmissions.

The specific PUSCH may be a PUSCH satisfying a given condition among the PUSCHs carrying the HARQ-ACK in the PUSCH repetition transmissions. The given condition may be one of three conditions 1 to 3 described above.

The DAI (DL total DAI) in the DCI (DL DCI, DL assignment, DCI format 1_0, 1_1) for scheduling the PDSCH may indicate the number of PDSCHs (the number of HARQ-ACKs) to be scheduled.

The UE may determine the HARQ-ACK codebook size on the specific PUSCH based on at least one of the DL total DAI in the DL DCI and the UL DAI in the UL DCI.

The UE can determine the HARQ-ACK transmission on the specific PUSCH based on the UL DAI even in a case of failing to receive the DL DAI corresponding to the specific PUSCH, and therefore, the base station can appropriately receive the HARQ-ACK.

In the case of piggybacking the HARQ-ACK onto the specific PUSCH, the UE may map (multiplex) the HARQ-ACK to a resource acquired by the rate matching of the UL data on the PUSCH.

Note that, in a case that the UE transmits the HARQ-ACK of up to N bits on the specific PUSCH, the UE may map (multiplex) the HARQ-ACK to a resource acquired by puncturing the UL data on the specific PUSCH. In a case that the UE transmits the HARQ-ACK of more than N bits on the specific PUSCH, the UE may map (multiplex) the HARQ-ACK to a resource acquired by the rate matching of the UL data on the specific PUSCH. N may be 2 or another integer.

The UE configured with the dynamic HARQ-ACK codebook may comply with one of next Aspects 1-2-1 and 1-2-2 with respect to the non-specific PUSCH.

### <<Aspect 1-2-1>>

The HARQ-ACK of up to N bits may be allowed to be piggybacked onto the non-specific PUSCH in the PUSCH repetition transmissions. In other words, the UE may piggyback the HARQ-ACK of up to N bits onto the non-specific PUSCH in the PUSCH repetition transmissions. N may be 2 or another integer. The UE may multiplex the HARQ-ACK of up to N bits to the non-specific PUSCH by puncturing the UL data on the non-specific PUSCH.

The UE may determine the HARQ-ACK codebook size on the non-specific PUSCH, based on the DL DAI (DL total DAI) and a given number N.

The base station may not schedule the HARQ-ACK of more than N bits on the non-specific PUSCH. In other words, the UE may assume that the HARQ-ACK of more than N bits is not scheduled on the non-specific PUSCH (or, may not assume that the HARQ-ACK of more than N bits is scheduled on the non-specific PUSCH). In the case that the HARQ-ACK of more than N bits is scheduled on the non-specific PUSCH, the UE may deal with this case as an error case.

In a case that the UE punctures the non-specific PUSCH by up to N bits, the base station can assume that the HARQ-ACK is piggybacked onto the non-specific PUSCH based on the DL total DAI, and decode the UL data and HARQ-ACK on the non-specific PUSCH.

The base station can appropriately receive the UL data and the HARQ-ACK by processing the puncturing of the UL data on the non-specific PUSCH based on the DL DAI and the given number N.

Even if the UE fails to detect the DL DCI and transmits the PUSCH without puncturing of the corresponding non-specific PUSCH, the base station can assume the puncturing of the resource for the HARQ-ACK codebook to decode the PUSCH without using the resource for the HARQ-ACK codebook.

In a case that the HARQ-ACK timing is the non-specific PUSCH and the HARQ-ACK is of more than N bits, the UE may drop the HARQ-ACK or piggyback the HARQ-ACK onto a PUSCH after (next to) the non-specific PUSCH.

The UE may puncture the UL data on the PUSCH in a case of piggybacking the HARQ-ACK of up to N bits onto the PUSCH, and may perform the rate matching of the UL data on the PUSCH in a case of piggybacking the HARQ-ACK of equal to or greater than N bits (exceeding N bits) onto the PUSCH. The base station may assume this operation of the UE to decode the PUSCH and the HARQ-ACK.

The UE may not be notified of the HARQ-ACK piggybacked onto the non-specific PUSCH through other than the DL DCI, and therefore, overhead can be suppressed.

A restriction (N bits) given to the HARQ-ACK codebook on the non-specific PUSCH allows reception performance of the PUSCH to be ensured.

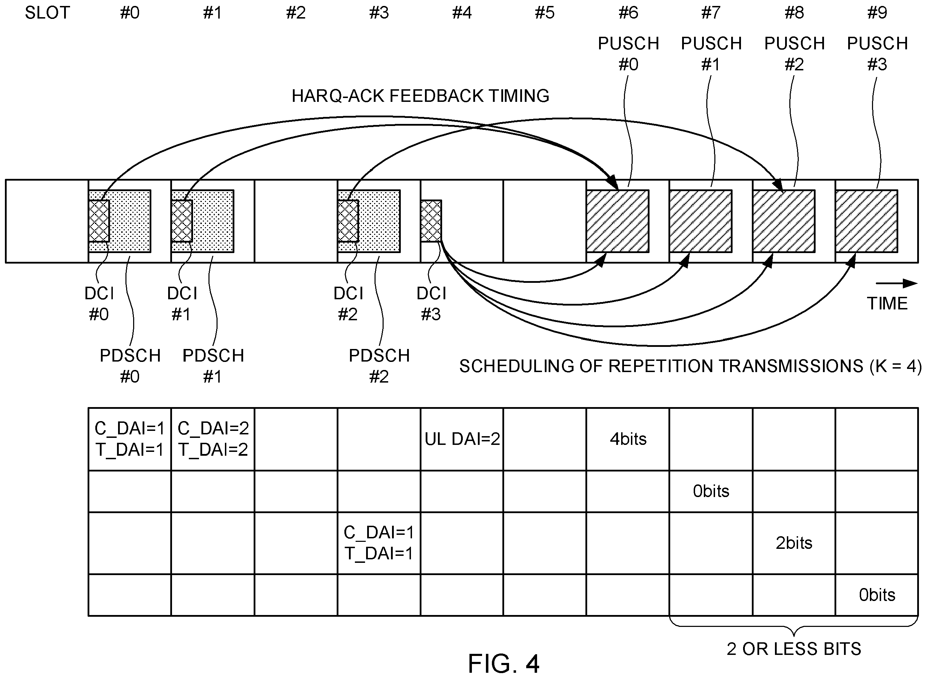

In an example of FIG. 4, N is 2.

In slot #0, the UE receives DCI #0 and PDSCH #0 scheduled on the basis of DCI #0. DCI #0 indicates slot #6 as a HARQ-ACK feedback timing for PDSCH #0.

In slot #1, the UE receives DCI #1 and PDSCH #1 scheduled on the basis of DCI #1. DCI #1 indicates slot #6 as a HARQ-ACK feedback timing for PDSCH #1.

In slot #3, the UE receives DCI #2 and PDSCH #2 scheduled on the basis of DCI #2. DCI #2 indicates slot #8 as a HARQ-ACK feedback timing for PDSCH #2.

In slot #4, the UE receives DCI #3. DCI #3 schedules repetition transmissions with the number of repetitions K = 4 in slots #6 to #9.

UE-specific PDSCH parameters (for example, PDSCH-Config) configured for the UE through higher layer signaling may include the maximum number of codewords scheduled on the basis of one DCI (for example, codeword maximum number, maxNrofCodeWordsScheduledByDCI). The codeword maximum number indicates the number of MCSs (Modulation and Coding Schemes), RVs (Redundancy Versions), NDIs (New Data Indicators) in the DCI. The codeword maximum number may be 1 or 2, or another integer.

In this example, the UE is configured with codeword maximum number = 2. Accordingly, the number of HARQ-ACK bits for each PDSCH is 2. The specific PUSCH is the earliest PUSCH (PUSCH #0).

The base station does not schedule a HARQ-ACK of more than two bits in slots #7, #8, and #9.

Assume that the counter DAI (C_DAI) in DCI #0 is 1, the counter DAI in DCI #1 is 2, the counter DAI in DCI #2 is 1, and the UL DAI in DCI #3 is 2.

The UE piggybacks a HARQ-ACK of UL DAI * codeword maximum number = 4 onto the specific PUSCH. Specifically, the UE piggybacks a 4-bit HARQ-ACK corresponding to PDSCHs #0 and #1 onto the PUSCH #0.

Since the UE can piggyback a HARQ-ACK of up to two bits onto the non-specific PUSCH, the UE piggybacks a 2-bit HARQ-ACK corresponding to PDSCH #2 onto the PUSCH #2.

### <<Aspect 1-2-2>>

The UE may determine the HARQ-ACK codebook size on the non-specific PUSCH based on the DL DAI (DL total DAI) in the DL DCI.

The UE may map (multiplex) the HARQ-ACK to a resource acquired by the rate matching of the UL data on the non-specific PUSCH. The UE may map (multiplex) the HARQ-ACK to a resource acquired by puncturing the UL data on the non-specific PUSCH.

In a case that the UE transmits the HARQ-ACK of up to N bits on the non-specific PUSCH, the UE may map (multiplex) the HARQ-ACK to a resource acquired by puncturing the UL data on the non-specific PUSCH. In a case that the UE transmits the HARQ-ACK of more than N bits on the non-specific PUSCH, the UE may map (multiplex) the HARQ-ACK to a resource acquired by the rate matching of the UL data on the non-specific PUSCH. N may be 2 or another integer.

The base station can appropriately receive the UL data and the HARQ-ACK by processing the rate matching or puncturing of the UL data on the non-specific PUSCH based on the DL total DAI.

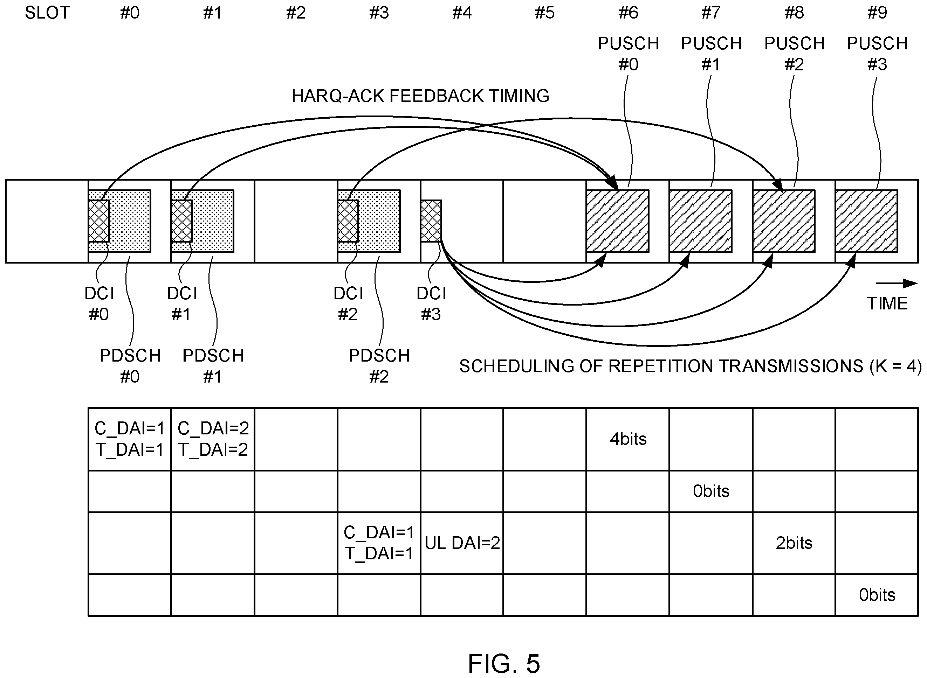

In an example of FIG. 5, the UE receives DCIs #0 to #3 and PDSCHs #0 to #2 similar to FIG. 4. The UE is configured with codeword maximum number = 2. Accordingly, the number of HARQ-ACK bits for each PDSCH is 2. The specific PUSCH is the earliest PUSCH (PUSCH #0).

In DCI #0, the counter DAI (C_DAI) is 1, and the total DAI (T_DAI) is 1. In DCI #1, the counter DAI is 2, and the total DAI is 2. In DCI #2, the counter DAI is 1, and the total DAI is 1.

In DCI #3, the UL DAI is 2.

The UE piggybacks a 4-bit HARQ-ACK corresponding to PDSCHs #0 and #1 onto the PUSCH #0 (specific PUSCH) based on the UL DAI in DCI #3. The UE piggybacks a 2-bit HARQ-ACK corresponding to PDSCH #2 onto the PUSCH #2 (non-specific PUSCH) based on the total DAI in DCI #2.

### (Aspect 2)

The UE may repeat the rate matching for the PUSCH in the case of piggybacking the UCI in the PUSCH repetition transmissions.

The UE may perform the rate matching of the UL data on the non-specific PUSCH in accordance with the rate matching of the UL data on the specific PUSCH. For example, in a case of rate matching for a specific PUSCH, the UE may perform the same rate matching as on the specific PUSCH on the non-specific PUSCH. The UE may perform rate matching (the same in a pattern and size as the rate matching in the specific PUSCH) in a resource in the non-specific PUSCH corresponding to a resource for the rate matching in the specific PUSCH.

### <Aspect 2-1>

A description is given of a case that the UE is configured with a semi-static HARQ-ACK codebook (type 1 HARQ-ACK codebook determination).

The UE configured with the semi-static HARQ-ACK codebook may comply with one of next Aspects 2-1-1 and 2-1-2.

### <<Aspect 2-1-1>>

The DAI (UL DAI) in the DCI (UL DCI, UL grant, DCI format 0_0, 0_1) for scheduling PUSCH repetition transmissions may indicate whether a HARQ-ACK is piggybacked onto one PUSCH (specific PUSCH) in the PUSCH repetition transmissions.

The specific PUSCH may be a PUSCH satisfying a given condition among the PUSCHs carrying the HARQ-ACK in the PUSCH repetition transmissions. The given condition may be one of three conditions 1 to 3 described above.

The HARQ-ACK piggybacked onto the specific PUSCH of up to the number of HARQ-ACK bits may be allowed to be piggybacked onto the non-specific PUSCH. In other words, the UE may piggyback the HARQ-ACK piggybacked onto the specific PUSCH of up to the number of HARQ-ACK bits onto the non-specific PUSCH.

The number of HARQ-ACK bits piggybacked onto the non-specific PUSCH may be the number of HARQ-ACK bits piggybacked onto the specific PUSCH.

In a case that the number of HARQ-ACK bits on one non-specific PUSCH in the PUSCH repetition transmissions is smaller than the number of HARQ-ACK bits on the specific PUSCH, the UE may add a NACK to the HARQ-ACK on the PUSCH. With this configuration, the UE may equalize the number of HARQ-ACK bits on the non-specific PUSCH with the number of HARQ-ACK bits on the specific PUSCH.

The UE may be configured with a HARQ-ACK association set to associate a PDSCH slot with a PUSCH slot based on the HARQ-ACK association set.

The UE may determine the HARQ-ACK codebook size based on the HARQ-ACK association set.

The UE may transmit a NACK as a HARQ-ACK for a slot with no PDSCH in the HARQ-ACK association set.

The base station may not configure a HARQ-ACK association set corresponding to the non-specific PUSCH having a HARQ-ACK codebook size larger than a HARQ-ACK codebook size corresponding to the specific PUSCH.

The UE may assume that the UE is not configured with (or, may not assume that the UE is configured with) a HARQ-ACK codebook size association set corresponding to the non-specific PUSCH having a HARQ-ACK codebook size larger than a HARQ-ACK codebook size corresponding to the specific PUSCH. In the case that the UE is configured with a HARQ-ACK codebook size association set corresponding to the non-specific PUSCH having a HARQ-ACK codebook size larger than a HARQ-ACK codebook size corresponding to the specific PUSCH, the UE may deal with this case as an error case.

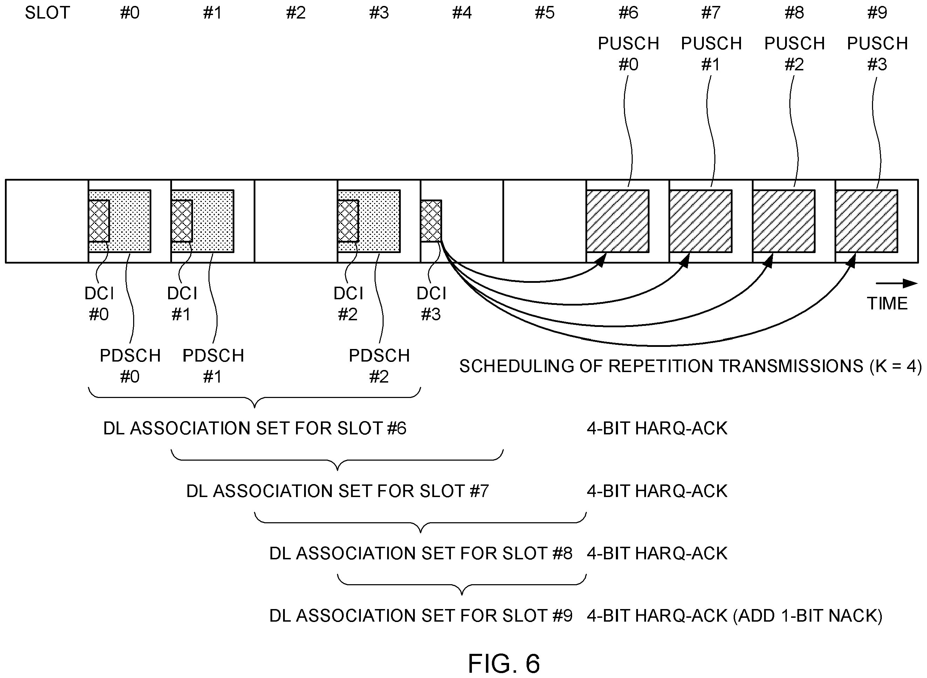

In an example of FIG. 6, the UE receives DCIs #0 to #3 and PDSCHs #0 to #2 similar to FIG. 2.

The specific PUSCH is the earliest PUSCH (PUSCH #0).

The UE is configured with the HARQ-ACK association set (K1 = {3, 4, 5, 6}).

The UL DAI in DCI #3 indicates whether to piggyback the HARQ-ACK onto the PUSCH #0 (specific PUSCH). In this example, the UL DAI indicates that the HARQ-ACK is piggybacked onto the non-specific PUSCH (valid).

A HARQ-ACK association set (DL association set) for slot #6 includes slots #0 to #3. The UE piggybacks a 4-bit HARQ-ACK for slots #0 to #3 onto the PUSCH in slot #6 (specific PUSCH).

A HARQ-ACK association set for slot #7 includes slots #1 to #4. The UE piggybacks a 4-bit HARQ-ACK for slots #1 to #4 onto the PUSCH in slot #7 (non-specific PUSCH).

A HARQ-ACK association set for slot #8 includes slots #2 to #5. The UE piggybacks a 4-bit HARQ-ACK for slots #2 to #5 onto the PUSCH in slot #8 (non-specific PUSCH).

A HARQ-ACK association set for slot #9 includes slots #3 to #5. The UE piggybacks a 4-bit HARQ-ACK obtained by adding a 1-bit NACK to a 3-bit HARQ-ACK for slots #3 to #5 onto the PUSCH in slot #9 (non-specific PUSCH).

### <<Aspect 2-1-2>>

The DAI (UL DAI) in the DCI (UL DCI, UL grant, DCI format 0_0, 0_1) for scheduling PUSCH repetition transmissions may indicate whether a HARQ-ACK is piggybacked onto all PUSCHs in the PUSCH repetition transmissions.

Here, the all PUSCHs in the PUSCH repetition transmissions may be interpreted as all PUSCHs each specified as a HARQ-ACK feedback timing by the DCI (DL DCI) for scheduling the PDSCH or interpreted as all PUSCHs each capable of transmitting a HARQ-ACK, in the PUSCH repetition transmissions.

In a case that the UL DAI is 1, the UE may piggyback the HARQ-ACK onto the all PUSCHs in the PUSCH repetition transmissions.

In a case that the UL DAI is 0, the UE may not piggyback the HARQ-ACK onto the all PUSCHs in the PUSCH repetition transmissions.

The UE may be configured with a HARQ-ACK association set to associate a PDSCH slot with a PUSCH slot based on the HARQ-ACK association set.

The UE may determine the HARQ-ACK codebook size based on the HARQ-ACK association set.

The UE may transmit a NACK as a HARQ-ACK for a slot with no PDSCH in the HARQ-ACK association set.

The maximum number of bits of the HARQ-ACK (HARQ-ACK maximum number) on the PUSCH in the PUSCH repetition transmissions may be allowed to be piggybacked onto the PUSCH in the PUSCH repetition transmissions.

The HARQ-ACK maximum number may be defined by a specification, or configured to the UE through higher layer signaling. The HARQ-ACK maximum number may be based on the HARQ-ACK association set.

In a case that the HARQ-ACK codebook size (the number of HARQ-ACK bits) on one non-specific PUSCH in the PUSCH repetition transmissions is smaller than the HARQ-ACK codebook size on the specific PUSCH, the UE may add a NACK to the HARQ-ACK on the non-specific PUSCH. With this configuration, the UE may equalize the HARQ-ACK codebook size on the non-specific PUSCH with the HARQ-ACK codebook size on the specific PUSCH.

The number of HARQ-ACK bits on each PUSCH in the PUSCH repetition transmissions may be equal to the HARQ-ACK maximum number. The UE may piggyback the HARQ-ACK of the HARQ-ACK maximum number onto the PUSCH of the HARQ-ACK feedback timing in the PUSCH repetition transmissions.

In a case that the number of HARQ-ACK bits on one PUSCH in the PUSCH repetition transmissions is smaller than the HARQ-ACK maximum number, the UE may add a NACK to the HARQ-ACK on the PUSCH. With this configuration, the UE may equalize the number of HARQ-ACK bits on the specific PUSCH with the HARQ-ACK maximum number.

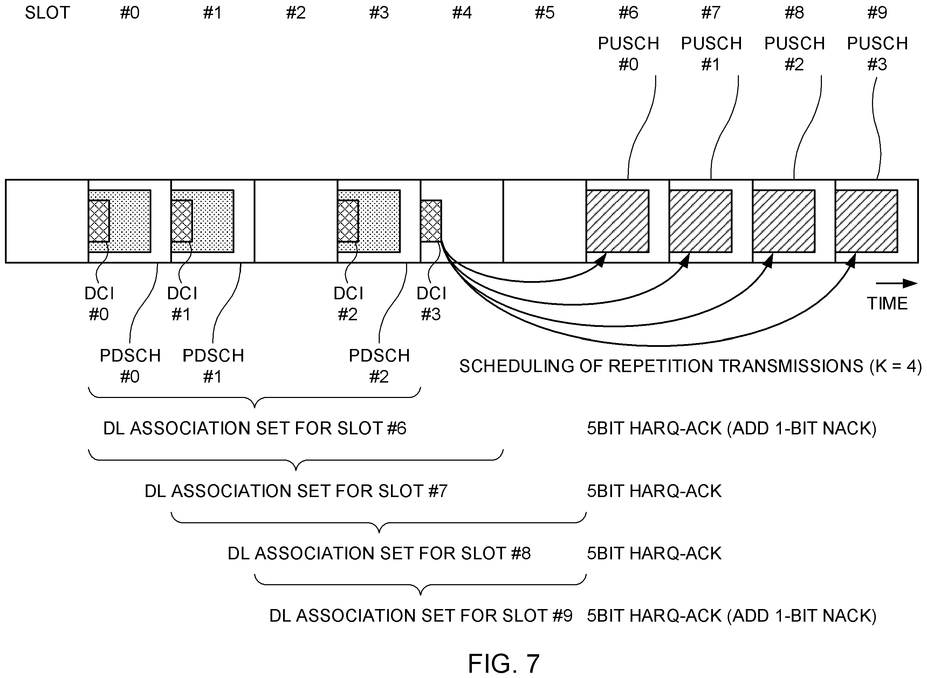

In an example of FIG. 7, the UE receives DCIs #0 to #3 and PDSCHs #0 to #2 similar to FIG. 2.

The UL DAI in DCI #3 indicates whether to piggyback the HARQ-ACK onto the PUSCHs #0 to #3. In this example, the UL DAI indicates that the HARQ-ACK is piggybacked onto the non-specific PUSCH (valid).

The HARQ-ACK maximum number is 5. The UE is configured with the HARQ-ACK association set (K1 = {3, 4, 5, 6, 7}).

The UL DAI in DCI #3 indicates whether the HARQ-ACK can be piggybacked onto the PUSCHs #0 to #3 (all PUSCHs). In this example, the UL DAI indicates that the HARQ-ACK can be piggybacked onto the all PUSCHs (valid).

A HARQ-ACK association set for slot #6 includes slots #-1 to #3. The UE piggybacks a 5-bit HARQ-ACK for slots #-1 to #3 onto the PUSCH in slot #6.

A HARQ-ACK association set for slot #7 includes slots #0 to #4. The UE piggybacks a 5-bit HARQ-ACK for slots #0 to #4 onto the PUSCH in slot #7.

A HARQ-ACK association set for slot #8 includes slots #1 to #5. The UE piggybacks a 5-bit HARQ-ACK for slots #1 to #5 onto the PUSCH in slot #8.

A HARQ-ACK association set for slot #9 includes slots #2 to #5. The UE piggybacks a 5-bit HARQ-ACK obtained by adding a 1-bit NACK to a 4-bit HARQ-ACK for slots #2 to #5 onto the PUSCH in slot #9.

### <Aspect 2-2>

A description is given of a case that the UE is configured with a dynamic HARQ-ACK codebook (type 2 HARQ-ACK codebook determination).

The UE configured with the dynamic HARQ-ACK codebook may comply with one of next Aspects 2-2-1 and 2-2-2 with respect to the non-specific PUSCH.

### <<Aspect 2-2-1>>

The DAI (UL DAI) in the DCI (UL DCI, UL grant, DCI format 0_0, 0_1) for scheduling PUSCH repetition transmissions may indicate a HARQ-ACK codebook size on one PUSCH (specific PUSCH) in the PUSCH repetition transmissions.

The specific PUSCH may be a PUSCH satisfying a given condition among the PUSCHs carrying the HARQ-ACK in the PUSCH repetition transmissions. The given condition may be one of three conditions 1 to 3 described above.

The DAI (DL total DAI) in the DCI (DL DCI, DL assignment, DCI format 1_0, 1_1) for scheduling the PDSCH may indicate the number of PDSCHs (the number of HARQ-ACKs) to be scheduled.

The UE may determine the HARQ-ACK codebook size on the specific PUSCH, based on at least one of the DL total DAI in the DL DCI and the UL DAI in the UL DCI.

In a case that the HARQ-ACK codebook size (the number of HARQ-ACK bits) on one non-specific PUSCH in the PUSCH repetition transmissions is smaller than the HARQ-ACK codebook size on the specific PUSCH, the UE may add a NACK to the HARQ-ACK on the non-specific PUSCH. With this configuration, the UE may equalize the HARQ-ACK codebook size on the non-specific PUSCH with the HARQ-ACK codebook size on the specific PUSCH.

The UE can determine the HARQ-ACK transmission on the specific PUSCH, based on the UL DAI even in a case of failing to receive the DL DAI corresponding to the specific PUSCH, and therefore, the base station can appropriately receive the HARQ-ACK.

In the case of piggybacking the HARQ-ACK onto the specific PUSCH, the UE may map (multiplex) the HARQ-ACK to a resource acquired by the rate matching of the UL data on the PUSCH.

The HARQ-ACK piggybacked onto the specific PUSCH of up to the number of HARQ-ACK bits may be allowed to be piggybacked onto the non-specific PUSCH. In other words, the UE may piggyback the HARQ-ACK piggybacked onto the non-specific PUSCH of up to the number of HARQ-ACK bits piggybacked onto the non-specific PUSCH.

The base station may not schedule the HARQ-ACK of more than the number of HARQ-ACK bits piggybacked onto the specific PUSCH on the non-specific PUSCH. The UE may assume that the HARQ-ACK of more than the number of HARQ-ACK bits piggybacked onto the specific PUSCH is not scheduled on the non-specific PUSCH (or, may not assume that the HARQ-ACK of more than the number of HARQ-ACK bits piggybacked onto the specific PUSCH is scheduled on the non-specific PUSCH). In the case that the HARQ-ACK of more than the number of HARQ-ACK bits piggybacked onto the specific PUSCH is scheduled on the non-specific PUSCH, the UE may deal with this case as an error case.

The base station can appropriately receive the UL data and HARQ-ACK on the non-specific PUSCH by processing the rate matching for the non-specific PUSCH similarly to the process of the rate matching for the specific PUSCH.

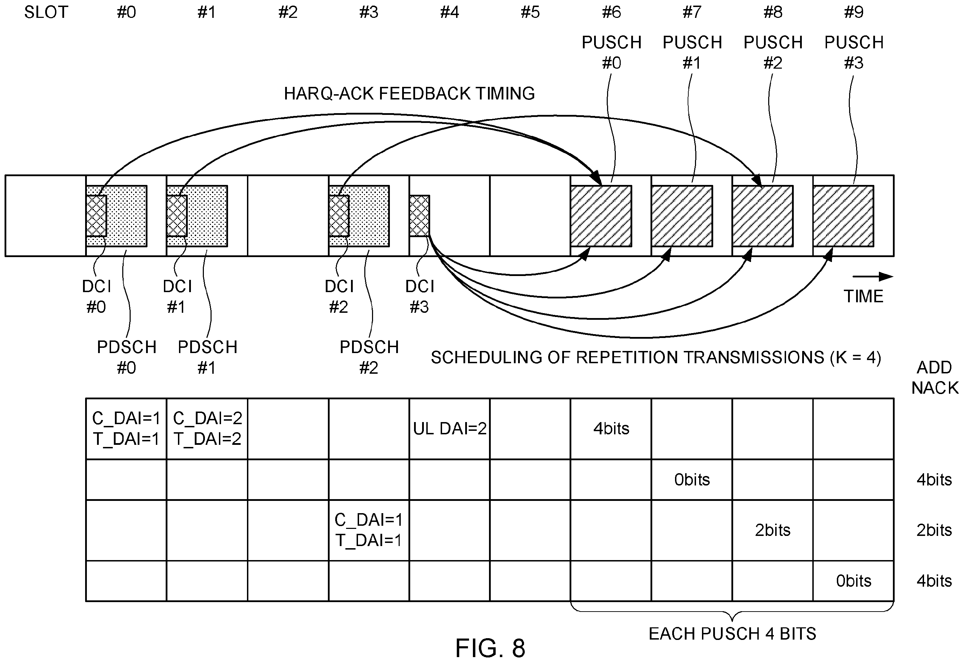

In an example of FIG. 8, the UE receives DCIs #0 to #3 and PDSCHs #0 to #2 similar to FIG. 4.

In this example, the UE is configured with codeword maximum number = 2. Accordingly, the number of HARQ-ACK bits for each PDSCH is 2. The specific PUSCH is the earliest PUSCH (PUSCH #0).

The base station does not schedule a HARQ-ACK of more than two bits in slots #7, #8, and #9.

In DCI #0, the counter DAI (C_DAI) is 1, and the total DAI (T_DAI) is 1. In DCI #1, the counter DAI is 2, and the total DAI is 2. In DCI #2, the counter DAI is 1, and the total DAI is 1.

In DCI #3, the UL DAI is 2.

The UE piggybacks a HARQ-ACK of UL DAI * codeword maximum number = 4 onto the specific PUSCH. Specifically, the UE piggybacks a 4-bit HARQ-ACK corresponding to PDSCHs #0 and #1 onto the PUSCH #0.

The UE piggybacks the HARQ-ACK of the number of HARQ-ACK bits on the specific PUSCH onto the non-specific PUSCH. Specifically, the UE piggybacks a 4-bit HARQ-ACK onto PDSCHs #1 and #3.

The UE piggybacks a 4-bit NACK onto the PUSCH #1 since HARQ-ACK corresponding to PUSCH #1 does not exist.

The UE piggybacks a 4-bit HARQ-ACK obtained by adding a 2-bit NACK to a 2-bit HARQ-ACK corresponding to PDSCH #2 onto the PUSCH #2.

The UE piggybacks a 4-bit NACK onto the PUSCH #3 since HARQ-ACK corresponding to PUSCH #3 does not exist.

### <<Aspect 2-2-2>>

The DAI (UL DAI) in the DCI (UL DCI, UL grant, DCI format 0_0, 0_1) for scheduling PUSCH repetition transmissions may indicate the maximum number of bits of the HARQ-ACK (HARQ-ACK maximum number) on one PUSCH in the PUSCH repetition transmissions.

The number of HARQ-ACK bits on each PUSCH in the PUSCH repetition transmissions may be equal to the HARQ-ACK maximum number. The UE may piggyback the HARQ-ACK of the HARQ-ACK maximum number onto the PUSCH of the HARQ-ACK feedback timing in the PUSCH repetition transmissions.

In a case that the number of HARQ-ACKs on one PUSCH in the PUSCH repetition transmissions is smaller than the HARQ-ACK maximum number, the UE may add a NACK to the HARQ-ACK on the PUSCH. With this configuration, the UE may equalize the number of HARQ-ACK bits on the PUSCH with the HARQ-ACK maximum number.

The base station can appropriately receive the UL data and HARQ-ACK in the PUSCH repetition transmissions by processing the indicated HARQ-ACK of the HARQ-ACK maximum number.

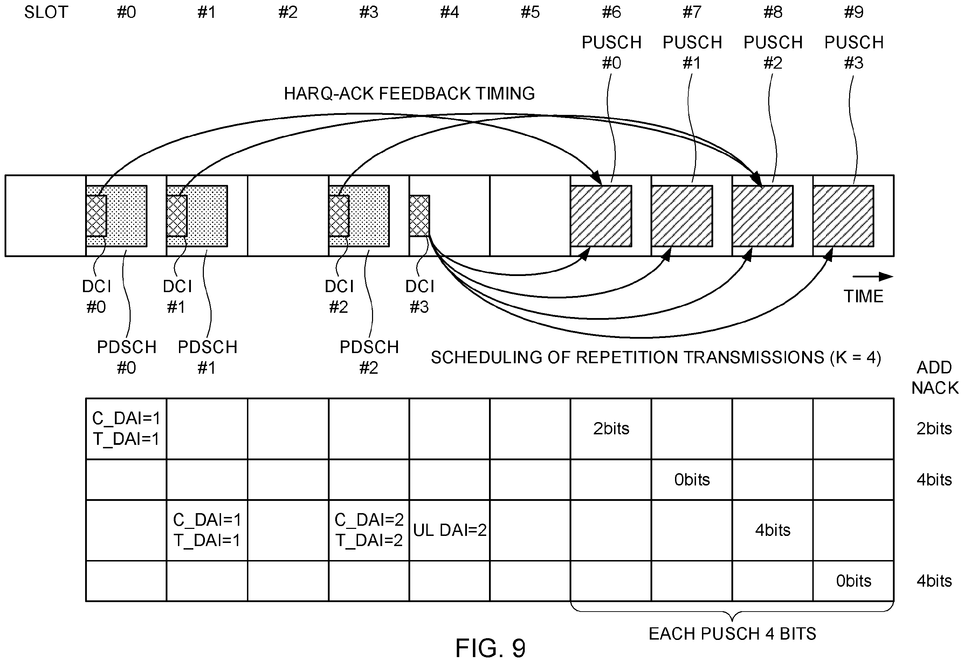

In an example of FIG. 9, the UE receives DCIs #0, #2, and #3 and PDSCHs #0 to #2 similar to FIG. 4.

DCI #1 indicates slot #8 as a HARQ-ACK feedback timing for PDSCH #1.

The UE is configured with codeword maximum number = 2.

In DCI #0, the counter DAI (C_DAI) is 1, and the total DAI (T_DAI) is 1. In DCI #1, the counter DAI is 1, and the total DAI is 1. In DCI #2, the counter DAI is 2, and the total DAI is 2.

In DCI #3, the UL DAI is 2.

The UE piggybacks a HARQ-ACK of the HARQ-ACK maximum number = UL DAI * codeword maximum number = 4 onto each PUSCH. Specifically, the UE piggybacks a 4-bit HARQ-ACK onto each of the PUSCHs #0 to #1.

The UE piggybacks a 4-bit HARQ-ACK obtained by adding a 2-bit NACK to a 2-bit HARQ-ACK corresponding to PDSCH #0 onto the PUSCH #0.

The UE piggybacks a 4-bit NACK onto the PUSCH #1 since HARQ-ACK corresponding to the PUSCH #1 does not exist.

The UE piggybacks a 4-bit HARQ-ACK corresponding to PDSCHs #1 and #2 onto the PUSCH #2.

The UE piggybacks a 4-bit NACK onto the PUSCH #3 since HARQ-ACK corresponding to the PUSCH #3 does not exist.

### (Other Aspects)

In a case that PUSCH repetition transmissions are scheduled in DCI format 0_1, the UE may apply Aspect 1.

In a case that PUSCH repetition transmissions are scheduled in DCI format 0_0, or PUSCH repetition transmissions are a configured-grant PUSCH, the UE may piggyback any HARQ-ACK onto any PUSCH in the PUSCH repetition transmissions.

The configured-grant PUSCH (configured-grant based transmission) may be a PUSCH (type 1) configured through higher layer signaling, and at least one of activation, deactivation, and retransmission of a PUSCH transmission with a given cycle may be controlled on the basis of the DCI CRC (Cyclic Redundancy Check)-scrambled with a CS (Configured Scheduling)-RNTI. In a dynamic grant based transmission (initial transmission or retransmission), scheduling may be controlled on the basis of the DCI CRC-scrambled with the C-RNTI.

According to this aspect, the UE can appropriately transmit a HARQ-ACK depending on the DCI format and whether or not the configured-grant PUSCH is applied.

### (Radio Communication System)

Hereinafter, a structure of a radio communication system according to the present embodiment will be described. In this radio communication system, at least one combination of the above plurality of aspects is used to perform communication.

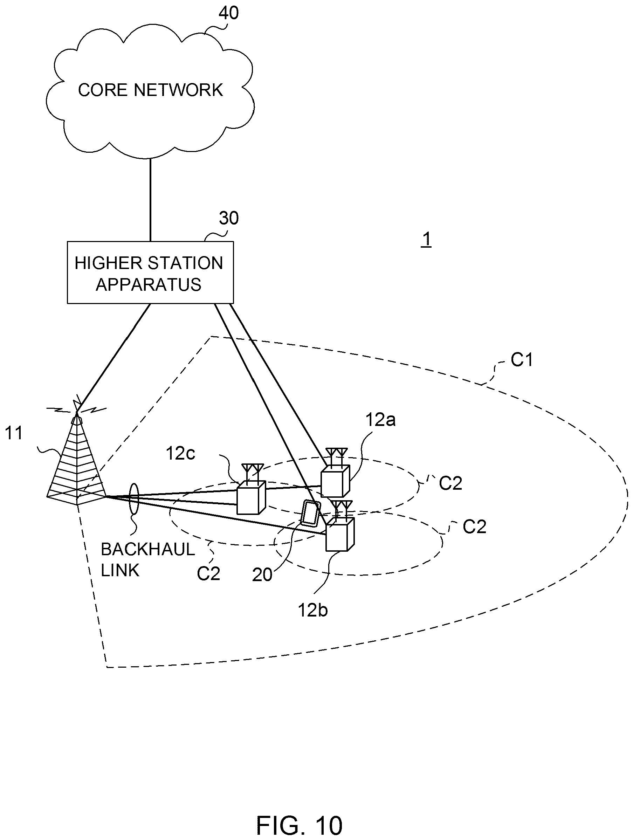

FIG. 10 is a diagram to show an example of a schematic structure of the radio communication system according to the present embodiment. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred to as a system implementing these.

The radio communication system 1 includes a base station 11 that forms a macro cell C1 of a relatively wide coverage, and base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and the like of each cell and user terminal 20 are by no means limited to the aspect shown in the diagram.

The user terminals 20 can connect with both the base station 11 and the base stations 12. It is assumed that the user terminals 20 use the macro cell C1 and the small cells C2 at the same time by means of CA or DC. The user terminals 20 can execute CA or DC by using a plurality of cells (CCs) (for example, five or less CCs, six or more CCs).

Between the user terminals 20 and the base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the base stations 12, a carrier of a relatively high frequency band (for example, 3.5 GHz, 5 GHz, and so on) and a wide bandwidth may be used, or the same carrier as that used between the user terminals 20 and the base station 11 may be used. Note that the structure of the frequency band for use in each base station is by no means limited to these.

The user terminals 20 can perform communication by using time division duplex (TDD) and/or frequency division duplex (FDD) in each cell. Furthermore, in each cell (carrier), a single numerology may be employed, or a plurality of different numerologies may be employed.

The term "numerology" may refer to communication parameters applied to transmission and/or reception of a certain signal and/or channel, and may indicate, for example, at least one of a subcarrier spacing, a bandwidth, a symbol length, a cyclic prefix length, a subframe length, a TTI length, the number of symbols per TTI, a radio frame structure, a filtering processing, a windowing processing, and so on.

A wired connection (for example, means in compliance with the CPRI (Common Public Radio Interface) such as an optical fiber, an X2 interface and so on) or a wireless connection may be established between the base station 11 and the base stations 12 (or between two base stations 12).

The base station 11 and the base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each base station 12 may be connected with the higher station apparatus 30 via the base station 11.

Note that the base station 11 is a base station having a relatively wide coverage, and may be referred to as a "macro base station," a "central node," an "eNB (eNodeB)," a "transmitting/receiving point" and so on. The base stations 12 are base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the base stations 11 and 12 will be collectively referred to as "base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel), which is used by each user terminal 20 on a shared basis, a broadcast channel (PBCH (Physical Broadcast Channel)), downlink L1/L2 control channels and so on, are used as downlink channels. User data, higher layer control information, SIBs (System Information Blocks) and so on are communicated on the PDSCH. The MIBs (Master Information Blocks) are communicated on the PBCH.

The downlink L1/L2 control channels include at least one of downlink control channels (a PDCCH (Physical Downlink Control Channel) and/or an EPDCCH (Enhanced Physical Downlink Control Channel), a PCFICH (Physical Control Format Indicator Channel), and a PHICH (Physical Hybrid-ARQ Indicator Channel). Downlink control information (DCI), including PDSCH and/or PUSCH scheduling information, and so on are communicated on the PDCCH.

Note that the scheduling information may be reported by the DCI. For example, the DCI scheduling DL data reception may be referred to as "DL assignment," and the DCI scheduling UL data transmission may be referred to as "UL grant."

The number of OFDM symbols to use for the PDCCH is communicated on the PCFICH. Transmission confirmation information (for example, also referred to as "retransmission control information," "HARQ-ACK," "ACK/NACK," and so on) of HARQ (Hybrid Automatic Repeat reQuest) to a PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information and so on are communicated on the PUSCH. In addition, radio link quality information (CQI (Channel Quality Indicator)) of the downlink, transmission confirmation information, SR (Scheduling Request), and so on are transmitted on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

### <Base Station>

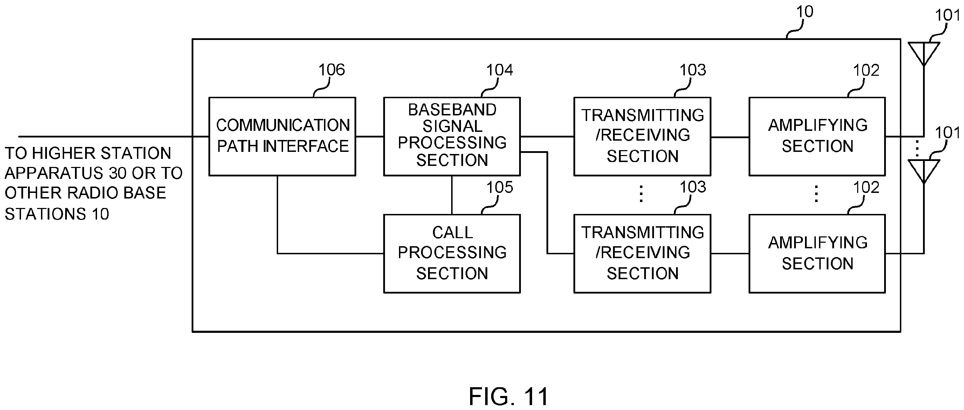

FIG. 11 is a diagram to show an example of an overall structure of the base station according to the present embodiment. A base station 10 includes a plurality of transmitting/receiving antennas 101, amplifying sections 102, transmitting/receiving sections 103, a baseband signal processing section 104, a call processing section 105 and a communication path interface 106. Note that the base station 10 may be configured to include one or more transmitting/receiving antennas 101, one or more amplifying sections 102 and one or more transmitting/receiving sections 103.

User data to be transmitted from the base station 10 to the user terminal 20 by the downlink is input from the higher station apparatus 30 to the baseband signal processing section 104, via the communication path interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present disclosure pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (setting up, releasing and so on) for communication channels, manages the state of the base station 10, manages the radio resources and so on.

The communication path interface 106 transmits and/or receives signals to and/or from the higher station apparatus 30 via a given interface. The communication path interface 106 may transmit and/or receive signals (backhaul signaling) with other base stations 10 via an inter-base station interface (for example, an optical fiber in compliance with the CPRI (Common Public Radio Interface) and an X2 interface).

Note that each transmitting/receiving section 103 may further include an analog beamforming section performing analog beamforming. The analog beamforming section can be constituted with an analog beamforming circuit (for example, a phase shifter, a phase shift circuit), or an analog beamforming apparatus (for example, a phase shift device) described based on general understanding of the technical field to which the present invention pertains. The transmitting/receiving antennas 101 can be formed of an antenna array, for example. Each transmitting/receiving section 103 is configured to adopt a single BF and a multi BF.

The transmitting/receiving sections 103 transmit the downlink (DL) signals (including at least one of DL data signals (downlink shared channels), DL control signals (downlink control channels), and DL reference signals) to the user terminals 20, and receive the uplink (UL) signals (including at least one of UL data signals, UL control signals, and UL reference signals) from the user terminals 20.

The transmitting/receiving sections 103 may transmit the downlink control information used for scheduling the downlink shared channels, and receive the acknowledgment signals for the downlink shared channels.

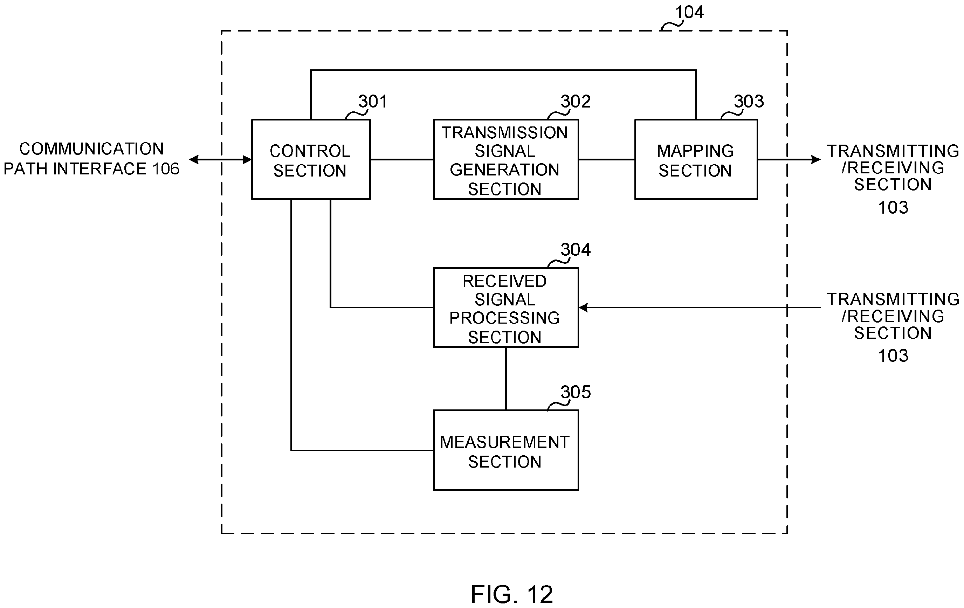

FIG. 12 is a diagram to show an example of a functional structure of the base station according to the present embodiment. Note that, the present example primarily shows functional blocks that pertain to characteristic parts of the present embodiment, and it is assumed that the base station 10 may include other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the base station 10, and some or all of the structures do not need to be included in the baseband signal processing section 104.

The control section (scheduler) 301 controls the whole of the base station 10. The control section 301 can be constituted with a controller, a control circuit or control apparatus that can be described based on general understanding of the technical field to which the present disclosure pertains.

The control section 301, for example, controls the generation of signals in the transmission signal generation section 302, the mapping of signals by the mapping section 303, and so on. The control section 301 controls the signal receiving processes in the received signal processing section 304, the measurements of signals in the measurement section 305, and so on.

The control section 301 controls the scheduling (for example, resource assignment) of system information, a downlink data signal (for example, a signal transmitted on the PDSCH), a downlink control signal (for example, a signal transmitted on the PDCCH and/or the EPDCCH. Transmission confirmation information, and so on). Based on the results of determining necessity or not of retransmission control to the uplink data signal, or the like, the control section 301 controls generation of a downlink control signal, a downlink data signal, and so on.

The transmission signal generation section 302 generates downlink signals (downlink control signals, downlink data signals, downlink reference signals and so on) based on commands from the control section 301 and outputs the downlink signals to the mapping section 303. The transmission signal generation section 302 can be constituted with a signal generator, a signal generation circuit or signal generation apparatus that can be described based on general understanding of the technical field to which the present disclosure pertains.

For example, the transmission signal generation section 302 generates DL assignment to report assignment information of downlink data and/or UL grant to report assignment information of uplink data, based on commands from the control section 301. The DL assignment and the UL grant are both DCI, and follow the DCI format. For a downlink data signal, encoding processing, modulation processing, and the like are performed in accordance with a coding rate, modulation scheme, or the like determined based on channel state information (CSI) from each user terminal 20.

The mapping section 303 maps the downlink signals generated in the transmission signal generation section 302 to given radio resources, based on commands from the control section 301, and outputs these to the transmitting/receiving sections 103. The mapping section 303 can be constituted with a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can be constituted with a signal processor, a signal processing circuit or signal processing apparatus that can be described based on general understanding of the technical field to which the present disclosure pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can be constituted with a measurer, a measurement circuit or measurement apparatus that can be described based on general understanding of the technical field to which the present disclosure pertains.

For example, the measurement section 305 may perform RRM (Radio Resource Management) measurement, CSI (Channel State Information) measurement, and so on, based on the received signal. The measurement section 305 may measure a received power (for example, RSRP (Reference Signal Received Power)), a received quality (for example, RSRQ (Reference Signal Received Quality), an SINR (Signal to Interference plus Noise Ratio), an SNR (Signal to Noise Ratio)), a signal strength (for example, RSSI (Received Signal Strength Indicator)), channel information (for example, CSI), and so on. The measurement results may be output to the control section 301.

### <User Terminal>

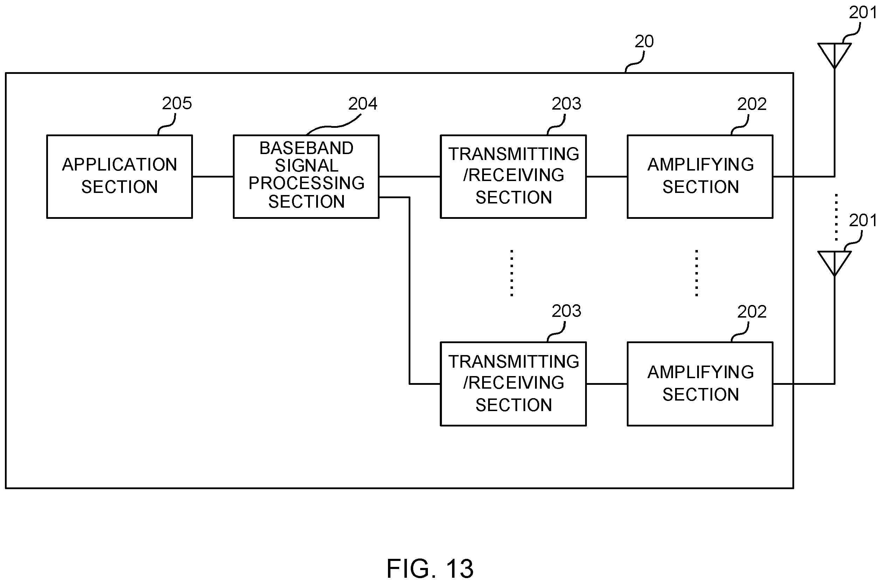

FIG. 13 is a diagram to show an example of an overall structure of a user terminal according to the present embodiment. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits or transmitting/receiving apparatus that can be described based on general understanding of the technical field to which the present disclosure pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

Note that each transmitting/receiving section 203 may further include an analog beamforming section performing analog beamforming. The analog beamforming section can be constituted with an analog beamforming circuit (for example, a phase shifter, a phase shift circuit), or an analog beamforming apparatus (for example, a phase shift device) described based on general understanding of the technical field to which the present invention pertains. The transmitting/receiving antennas 201 can be formed of an antenna array, for example. Each transmitting/receiving section 203 is configured to adopt a single BF and a multi BF.

The transmitting/receiving sections 203 receive the downlink (DL) signals (including at least one of DL data signals (downlink shared channels), DL control signals (downlink control channels), and DL reference signals) from the base station 10, and transmit the uplink (UL) signals (including at least one of UL data signals, UL control signals, and UL reference signals) to the base station 10.

The transmitting/receiving sections 203 may receive the downlink shared channels to be scheduled in the downlink control information, and transmit the acknowledgment signals for the downlink shared channels. The transmitting/receiving sections 203 may transmit the uplink shared channels to be scheduled in the downlink control information.

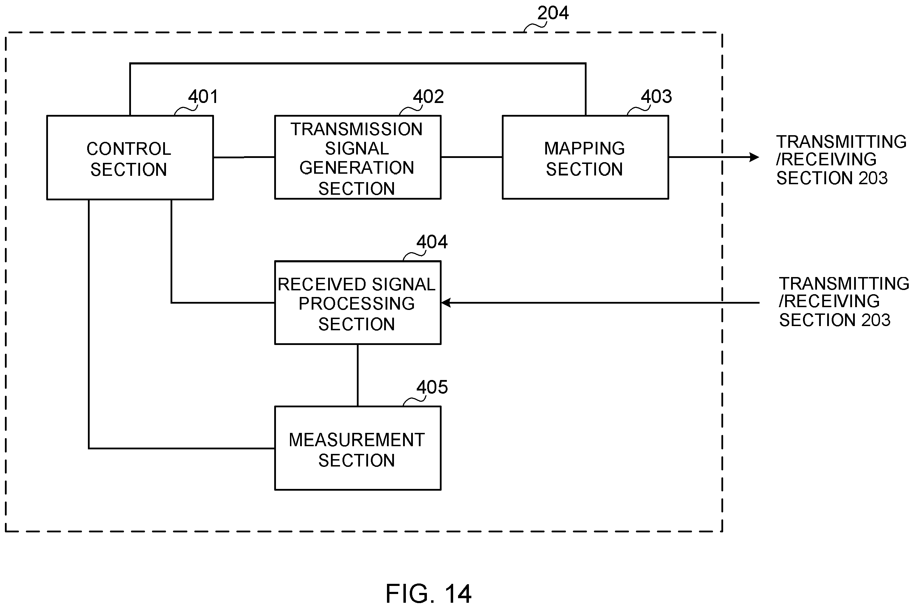

FIG. 14 is a diagram to show an example of a functional structure of the user terminal according to the present embodiment. Note that, the present example primarily shows functional blocks that pertain to characteristic parts of the present embodiment, and it is assumed that the user terminal 20 may include other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit or control apparatus that can be described based on general understanding of the technical field to which the present disclosure pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 acquires a downlink control signal and a downlink data signal transmitted from the base station 10, from the received signal processing section 404. The control section 401 controls generation of an uplink control signal and/or an uplink data signal, based on the results of determining necessity or not of retransmission control to a downlink control signal and/or a downlink data signal.

The transmission signal generation section 402 generates uplink signals (uplink control signals, uplink data signals, uplink reference signals and so on) based on commands from the control section 401, and outputs the uplink signals to the mapping section 403. The transmission signal generation section 402 can be constituted with a signal generator, a signal generation circuit or signal generation apparatus that can be described based on general understanding of the technical field to which the present disclosure pertains.

For example, the transmission signal generation section 402 generates an uplink control signal about transmission confirmation information, the channel state information (CSI), and so on, based on commands from the control section 401. The transmission signal generation section 402 generates uplink data signals based on commands from the control section 401. For example, when a UL grant is included in a downlink control signal that is reported from the base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit or mapping apparatus that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals are, for example, downlink signals transmitted from the base station 10 (downlink control signals, downlink data signals, downlink reference signals and so on). The received signal processing section 404 can be constituted with a signal processor, a signal processing circuit or signal processing apparatus that can be described based on general understanding of the technical field to which the present disclosure pertains. The received signal processing section 404 can constitute the receiving section according to the present disclosure.

The received signal processing section 404 outputs the decoded information acquired through the receiving processes to the control section 401. The received signal processing section 404 outputs, for example, broadcast information, system information, RRC signaling, DCI and so on, to the control section 401. The received signal processing section 404 outputs the received signals and/or the signals after the receiving processes to the measurement section 405.

The measurement section 405 conducts measurements with respect to the received signals. The measurement section 405 can be constituted with a measurer, a measurement circuit or measurement apparatus that can be described based on general understanding of the technical field to which the present disclosure pertains.

For example, the measurement section 405 may perform RRM measurement, CSI measurement, and so on, based on the received signal. The measurement section 405 may measure a received power (for example, RSRP), a received quality (for example, RSRQ, SINR, SNR), a signal strength (for example, RSSI), channel information (for example, CSI), and so on. The measurement results may be output to the control section 401.

The transmitting/receiving section 203 may transmit a plurality of uplink shared channels in repetition transmissions. The control section 401 may transmit, based on the number of HARQ-ACKs (Hybrid Automatic Repeat reQuest-Acknowledgements) for the downlink data (PDSCH) (the number of HARQ-ACKs in which a HARQ-ACK codebook size, an UL DAI, a DL total DAI, and a HARQ-ACK feedback timing are in the same slot), the HARQ-ACK on at least one of the plurality of uplink shared channels (PUSCH, specific PUSCH, non-specific PUSCH).

A presence or absence of, or the number of HARQ-ACKs, the HARQ-ACK being transmitted on one specific uplink shared channel (specific PUSCH) satisfying a given condition among the plurality of uplink shared channels, may be based on a downlink assignment index (DAI, UL DAI, DL total DAI) included in downlink control information for scheduling the repetition transmissions.

A presence or absence of, or the number of HARQ-ACKs, the HARQ-ACK being transmitted on each of the plurality of uplink shared channels, may be based on a downlink assignment index (DAI, UL DAI, DL total DAI) included in downlink control information for scheduling the repetition transmissions.

The control section 401 may perform rate matching in the specific uplink shared channel (specific PUSCH) satisfying a given condition among the plurality of uplink shared channels, and may not perform rate matching in an uplink shared channel (non-specific PUSCH) other than the specific uplink shared channel among the plurality of uplink shared channels.

The control section 401 may perform rate matching in the specific uplink shared channel (specific PUSCH) satisfying a given condition among the plurality of uplink shared channels, and may perform rate matching in an uplink shared channel (non-specific PUSCH) other than the specific uplink shared channel among the plurality of uplink shared channels.

### <Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

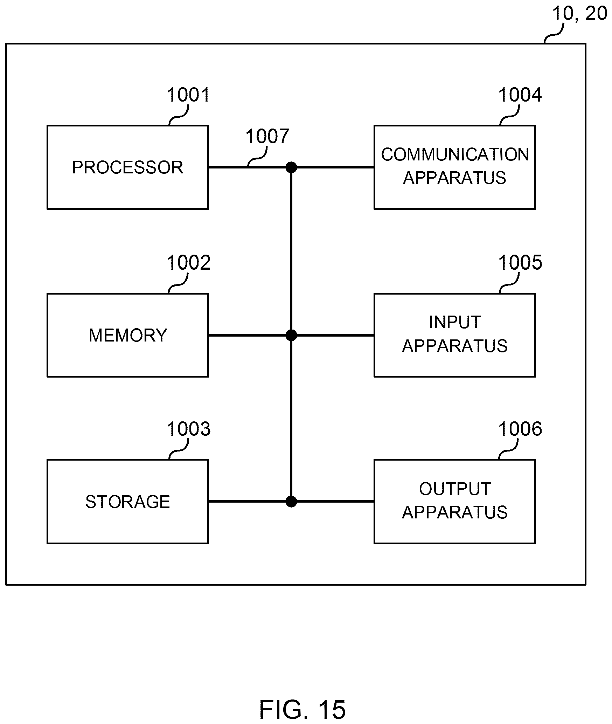

For example, a base station, a user terminal, and so on according to one embodiment of the present disclosure may function as a computer that executes the processes of the radio communication method of the present disclosure. FIG. 15 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, and a unit can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)," and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of a wired network and a wireless network, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106, and so on may be implemented by the communication apparatus 1004. In the transmitting/receiving section 103 (203), the transmitting section 103a (203a) and the receiving section 103b (203b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an ASIC (Application-Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "transmission time interval (TTI)," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (PRB (Physical RB))," a "sub-carrier group (SCG)," a "resource element group (REG)," a "PRB pair," an "RB pair," and so on.

Furthermore, a resource block may be constituted of one or a plurality of resource elements (REs). For example, one RE may correspond to a radio resource field of one subcarrier and one symbol.

A bandwidth part (BWP) (which may be also referred to as partial bandwdth and so on) may represent a subset of continuous common RBs (common resource blocks) for a certain numerology in a certain carrier. Here, the common RBs may be specified by an RB index using, as a reference, a common reference point of that carrier. The PRB may be defined in a certain BWP and numbered in the BWP.

A BWP may include a BWP for UL (UL BWP) and a BWP for DL (DL BWP). One or a plurality of BWPs may be configured in one carrier for the UE.

At least one of the configured BWPs may be active, and the UE may not assume transmitting and/or receiving a given signal/channel out of the active BWP. Note that a "cell", a "carrier" and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other names, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure may be used interchangeably.

In the present disclosure, the terms such as "precoding," a "precoder," a "weight (precoding wait)," "quasi-co-location (QCL)," a "TCI state (Transmission Configuration Indication state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNodeB (eNB)," a "gNodeB (gNB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," "terminal," and the like may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an IoT (Internet of Things) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "D2D (Device-to-Device)," "V2X (Vehicle-to-Everything)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables, printed electrical connections, and the like, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal (20) comprising:
a receiving section (203) adapted to receive a downlink control information, DCI, for scheduling, over more than two slots, a physical uplink shared channel, PUSCH,; and
a control section (401) adapted to, if a slot indicated by a feedback timing indicator field for hybrid automatic repeat request-acknowledgement, HARQ-ACK, information overlaps with two slots among the more than two slots, determine whether to transmit the HARQ-ACK information in the two slots in the PUSCH based on a downlink assignment index, DAI, field value in the DCI.

2. The terminal (20) according to claim 1, wherein the PUSCH comprises repeated transmissions over the more than two slots.

3. The terminal (20) according to claim 1 or 2, wherein if the DAI field value is 1, then the control section (401) is adapted to transmit the HARQ-ACK information in the PUSCH, and
if the DAI field value is 0, then the control section (401) is adapted to not transmit the HARQ-ACK information in the PUSCH.

4. The terminal (20) according to any one of claims 1 through 3, wherein if the terminal is configured with a semi-static HARQ-ACK codebook, then the control section (401) is adapted to determine whether to transmit the HARQ-ACK information in the PUSCH based on the DAI field value.

5. . A radio communication method for a terminal comprising:
receiving a downlink control information, DCI, for scheduling, over more than two slots, a physical uplink shared channel, PUSCH,; and
if a slot indicated by a feedback timing indicator field for hybrid automatic repeat request-acknowledgement, HARQ-ACK, information overlaps with two slots among the more than two slots, determining whether to transmit the HARQ-ACK information in the two slots in the PUSCH based on a downlink assignment index, DAI, field value in the DCI.

6. Abase station (10) comprising:
a transmitting section (103) adapted to transmit a downlink control information, DCI, for scheduling, over more than two slots, a physical uplink shared channel, PUSCH,; and
a control section (301) adapted to control reception of hybrid automatic repeat request-acknowledgement, HARQ-ACK, information,
wherein if a slot indicated by a feedback timing indicator field for the HARQ-ACK information overlaps with two slots among the more than two slots, whether the HARQ-ACK information in the two slots in the PUSCH is transmitted is based on a downlink assignment index, DAI, field value in the DCI.

7. A system (1) comprising:
a terminal (20) that comprises:
a receiving section (203) adapted to receive a downlink control information, DCI, for scheduling, over more than two slots, a physical uplink shared channel, PUSCH,; and
a control section (401) adapted to, if a slot indicated by a feedback timing indicator field for hybrid automatic repeat request-acknowledgement, HARQ-ACK information overlaps with two slots among the more than two slots, determine whether to transmit the HARQ-ACK information in the two slots in the PUSCH based on a downlink assignment index, DAI, field value in the DCI, and
a base station (10) adapted to transmit the DCI.

## Patentansprüche

1. Endgerät (20), umfassend:
einen Empfangsabschnitt (203), der so angepasst ist, dass er eine Abwärtsverbindungssteuerungsinformation, DCI, zum Planen eines gemeinsam genutzten physikalischen Aufwärtsverbindungskanals, PUSCH, über mehr als zwei Schlitze empfängt,; und
einen Steuerabschnitt (401), der so angepasst ist, dass er, wenn ein Schlitz, der durch ein Rückkopplungszeitanzeigefeld für hybride automatische Wiederholungsanfrage-Bestätigungs-, HARQ-ACK-, Information angezeigt wird, sich mit zwei Schlitzen unter den mehr als zwei Schlitzen überschneidet, bestimmt, ob die HARQ-ACK-Information in den zwei Schlitzen in dem PUSCH zu übertragen ist, basierend auf einem Abwärtsverbindungszuweisungsindex-, DAI-, Feldwert in der DCI.

2. Endgerät (20) nach Anspruch 1, wobei der PUSCH wiederholte Übertragungen über die mehr als zwei Schlitze umfasst.

3. Endgerät (20) nach Anspruch 1 oder 2, wobei, wenn der DAI-Feldwert 1 ist, der Steuerabschnitt (401) dann so angepasst ist, dass er die HARQ-ACK-Information in dem PUSCH überträgt, und
wenn der DAI-Feldwert 0 ist, dann der Steuerabschnitt (401) so angepasst ist, dass er die HARQ-ACK-Information in dem PUSCH nicht überträgt.

4. Endgerät (20) nach einem der Ansprüche 1 bis 3, wobei, wenn das Endgerät mit einem semistatischen HARQ-ACK-Codebuch konfiguriert ist, der Steuerabschnitt (401) dann so angepasst ist, dass er bestimmt, ob die HARQ-ACK-Information in dem PUSCH zu übertragen ist, basierend auf dem DAI-Feldwert.

5. Funkkommunikationsverfahren für ein Endgerät, umfassend:
Empfangen einer Abwärtsverbindungssteuerungsinformation, DCI, zum Planen eines gemeinsam genutzten physikalischen Aufwärtsverbindungskanals, PUSCH, über mehr als zwei Schlitze,; und
wenn ein Schlitz, der durch ein Rückkopplungszeitanzeigefeld für hybride automatische Wiederholungsanfrage-Bestätigungs-, HARQ-ACK-, Information angezeigt wird, sich mit zwei Schlitzen unter den mehr als zwei Schlitzen überschneidet, Bestimmen, ob die HARQ-ACK-Information in den zwei Schlitzen in dem PUSCH zu übertragen ist, basierend auf einem Abwärtsverbindungszuweisungsindex-, DAI-, Feldwert in der DCI.

6. Basisstation (10), umfassend:
einen Sendeabschnitt (103), der so angepasst ist, dass er eine Abwärtsverbindungssteuerungsinformation, DCI, zum Planen eines gemeinsam genutzten physikalischen Aufwärtsverbindungskanals, PUSCH, über mehr als zwei Schlitze überträgt,; und
einen Steuerabschnitt (301), der so angepasst ist, dass er einen Empfang von hybrider automatischer Wiederholungsanfrage-, HARQ-ACK-, Information steuert,
wobei, wenn ein Schlitz, der durch ein Rückkopplungszeitanzeigefeld für die HARQ-ACK-Information angezeigt wird, sich mit zwei Schlitzen unter den mehr als zwei Schlitzen überschneidet, die Entscheidung, ob die HARQ-ACK-Information in den zwei Schlitzen in dem PUSCH übertragen wird, auf einem Abwärtsverbindungszuweisungsindex-, DAI-, Feldwert in der DCI basiert.

7. System (1), umfassend:
ein Endgerät (20), das Folgendes umfasst:
einen Empfangsabschnitt (203), der so angepasst ist, dass er eine Abwärtsverbindungssteuerungsinformation, DCI, zum Planen eines gemeinsam genutzten physikalischen Aufwärtsverbindungskanals, PUSCH, über mehr als zwei Schlitze empfängt,; und
einen Steuerabschnitt (401), der so angepasst ist, dass er, wenn ein Schlitz, der durch ein Rückkopplungszeitanzeigefeld für hybride automatische Wiederholungsanfragebestätigungs-, HARQ-ACK-, Information angezeigt wird, sich mit zwei Schlitzen unter den mehr als zwei Schlitzen überschneidet, bestimmt, ob die HARQ-ACK-Information in den zwei Schlitzen in dem PUSCH zu übertragen ist, basierend auf einem Abwärtsverbindungszuweisungsindex-, DAI-, Feldwert in der DCI, und
eine Basisstation (10), die so angepasst ist, dass sie die DCI überträgt.

## Revendications

1. Terminal (20) comprenant :
une section de réception (203) adaptée pour recevoir des informations de commande de liaison descendante, DCI, pour la planification, sur plus de deux créneaux, d'un canal partagé physique de liaison montante, PUSCH ; et
une section de commande (401) adaptée pour, si un créneau indiqué par un champ indicateur de temporisation à rétroaction pour informations d'accusé de réception de demande de répétition automatique hybride, HARQ-ACK, chevauche deux créneaux parmi les plus de deux créneaux, déterminer s'il faut transmettre les informations HARQ-ACK aux deux créneaux dans le PUSCH sur la base d'une valeur de champ d'indice d'attribution de liaison descendante, DAI, dans les DCI.

2. Terminal (20) selon la revendication 1, dans lequel le PUSCH comprend des transmissions répétées sur les plus de deux créneaux.

3. Terminal (20) selon la revendication 1 ou la revendication 2, dans lequel, si la valeur de champ DAI est 1, alors la section de commande (401) est adaptée pour transmettre les informations HARQ-ACK dans le PUSCH, et
dans lequel, si la valeur de champ DAI est 0, alors la section de commande (401) est adaptée pour ne pas transmettre les informations HARQ-ACK dans le PUSCH.

4. Terminal (20) selon l'une quelconque des revendications 1 à 3, dans lequel si le terminal est configuré avec un livre de codes HARQ-ACK semi-statique, alors la section de commande (401) est adaptée pour déterminer s'il faut transmettre les informations HARQ-ACK dans le PUSCH sur la base de la valeur de champ DAI.

5. Procédé de radiocommunication pour un terminal comprenant :
la réception d'informations de commande de liaison descendante, DCI, pour la planification, sur plus de deux créneaux, d'un canal partagé physique de liaison montante, PUSCH, ; et
si un créneau indiqué par un champ indicateur de temporisation à rétroaction pour informations d'accusé de réception de demande de répétition automatique hybride, HARQ-ACK, chevauche deux créneaux parmi les plus de deux créneaux, la détermination établissant s'il faut transmettre les informations HARQ-ACK aux deux créneaux dans le PUSCH sur la base d'une valeur de champ d'indice d'attribution de liaison descendante, DAI, dans les DCI.

6. Station de base (10) comprenant :
une section de transmission (103) adaptée pour transmettre des informations de commande de liaison descendante, DCI, pour la planification, sur plus de deux créneaux, d'un canal partagé physique de liaison montante, PUSCH ; et
une section de commande (301) adaptée pour commander la réception d'informations d'accusé de réception de demande de répétition automatique hybride, HARQ-ACK,
dans laquelle si un créneau indiqué par un champ indicateur de temporisation à rétroaction pour les informations HARQ-ACK chevauche deux créneaux parmi les plus de deux créneaux, le fait que les informations HARQ-ACK dans les deux créneaux dans le PUSCH soient transmises ou non est basé sur une valeur de champ d'indice d'attribution de liaison descendante, DAI, dans les DCI.

7. Système (1) comprenant :
un terminal (20) qui comprend :
une section de réception (203) adaptée pour recevoir des informations de commande de liaison descendante, DCI, pour la planification, sur plus de deux créneaux, d'un canal partagé physique de liaison montante, PUSCH ; et
une section de commande (401) adaptée pour, si un créneau indiqué par un champ indicateur de temporisation à rétroaction pour informations d'accusé de réception de demande de répétition automatique hybride, HARQ-ACK, chevauche deux créneaux parmi les plus de deux créneaux, déterminer s'il faut transmettre les informations HARQ-ACK aux deux créneaux dans le PUSCH sur la base d'une valeur de champ d'indice d'attribution de liaison descendante, DAI, dans les DCI, et
une station de base (10) adaptée pour transmettre les DCI.
